# EUROPEAN PATENT APPLICATION

(11) **EP 3 560 773 A1**
(43) Date of publication of application: **30.10.2019**
(21) Application number: 19170180.4
(22) Date of filing: 18.04.2019
(51) Int. Cl.: B60S 1/38, B60S 1/40, B60S 1/42

(54) **WIPER SYSTEM**

(30) Priority: 27.04.2018 KR 20180049289
(71) Applicant: KBWS Corporation (Profit Organization), Daegu 42705 (KR)
(72) Inventor: An, Jae Hyuck, 43008 Daegu (KR); Lee, Woo Sung, 43014 Daegu (KR); Park, Jin Wan, 42965 Daegu (KR); Kim, Kwan Hee, 41842 Daegu (KR)
(74) Representative: Jakelski & Althoff Patentanwälte PartG mbB

(57) **Abstract**

A wiper system may be provided that includes: base adaptor (170 - 970) which is coupled to a wiper blade; an upper adaptor (130 - 930) which is fastened to the base adaptor; an impact absorbing member (150 - 950) which is disposed between the base adaptor and the upper adaptor; and a connector (100 - 900) which is fastened to the upper adaptor.

## Description

### BACKGROUND

### Field

The present disclosure relates to a wiper system and more particularly to a wiper system capable of reducing impact and noise which occur between a wiper blade and a windshield when a wiper is operated.

### Description of the Related Art

A windshield for blocking wind blowing to the front of a vehicle or preventing the introduction of rainwater during the driving of the vehicle is installed on the front side of the vehicle. Dust or dirt accumulated on the surface of the windshield makes it difficult to ensure forward visibility. In particular, it is possible to keep eyes forward by quickly removing moisture on the surface of the windshield when traveling in the snowy or rainy region. To this end, a vehicle is equipped with a wiper system, thereby removing dust or rainwater on the surface of the windshield.

In the configuration of a conventional wiper system, the wiper system includes a wiper motor, a driving link which is operated by the wiper motor, a pivot shaft which is connected to the driving link and is driven, a wiper arm which is coupled to the upper end of the pivot shaft, and a wiper blade which is connected to the wiper arm. The central portion of the wiper blade is secured to the end of the wiper arm. When the wiper arm is operated, the wiper blade wipes various dusts or impurities present on the surface of the windshield by moving within a range of a certain angle along the surface of the windshield.

When the wiper is operated, and particularly when the wiper blade is rotated in one direction and then is rotated in a reverse direction to the one direction, noise is generated between the wiper blade and the windshield. Also, when, during the operation of the wiper, the wiper is operated more rapidly or the vehicle is traveling at a high speed, the reversely rotating wiper blade may fall off the windshield and land again on the windshield. During this phenomenon, impact may occur.

In order to solve such a problem, a method has been proposed in the past in which the operation speed of the wiper blade is reduced by lowering the voltage of the wiper motor at the position where the wiper blade is reversely rotated. However, at present, there is a demand for a wiper system which is capable of effectively reducing the wiper operation noise or impact while maintaining the operation speed without reduction of the operation speed of the wiper.

### SUMMARY

One embodiment is a wiper system including: base adaptor which is coupled to a wiper blade; an upper adaptor which is fastened to the base adaptor; an impact absorbing member which is disposed between the base adaptor and the upper adaptor; and a connector which is fastened to the upper adaptor.

The impact absorbing member has a predetermined length in one direction.

The base adaptor includes a base adaptor base portion, a first base adaptor protrusion which protrudes toward the connector from a middle portion of the base adaptor base portion, and a second base adaptor protrusion which protrudes toward the connector from a central portion of a top surface of the first base adaptor protrusion. The impact absorbing member is disposed on a top surface of the first base adaptor protrusion and is coupled to the second base adaptor protrusion.

The impact absorbing member has a predetermined length and includes at least one bent portion.

The base adaptor includes a base adaptor base portion, a base adaptor protrusion which protrudes toward the connector from the base adaptor base portion, and a receiving recess formed between the base adaptor base portion and the base adaptor protrusion. One side of the impact absorbing member is disposed in the receiving recess, and the other side of the impact absorbing member is disposed on a top surface of the base adaptor protrusion.

The impact absorbing member has a predetermined length and includes two or more bent portions. The impact absorbing member includes a first portion, a second portion, and a third portion which are separated by the bent portion. An angle formed by the first portion and the second portion and an angle formed by the second portion and the third portion are obtuse angles.

The base adaptor includes a base adaptor base portion, a first base adaptor sidewall and a second base adaptor sidewall which are formed in a longitudinal direction of the wiper blade and protrude toward the connector from the base adaptor base portion. The first base adaptor sidewall and the second base adaptor sidewall are opposite to each other and are disposed apart from each other at a predetermined distance. One or more connection members which connect the first base adaptor sidewall and the second base adaptor sidewall are formed between the first base adaptor sidewall and the second base adaptor sidewall. The first portion of the impact absorbing member is disposed under the connection member.

The impact absorbing member has a predetermined length and includes two or more bent portions. The impact absorbing member includes a first portion, a second portion, and a third portion which are separated by the bent portion. The first portion is disposed between the second portion and the third portion. The second portion and the third portion have a shape convex toward the connector.

The impact absorbing member includes a first member, a second member, and a third member. The first member has a predetermined length in one direction. The second member protrudes from one side of the first member toward the connector and includes at least one bent portion. The third member protrudes from the other side of the first member toward the connector and includes at least one bent portion. An end portion of the second member and an end portion of the third member face each other.

The impact absorbing member has a predetermined length in one direction. The impact absorbing member includes a plurality of wing portions which extend respectively from both side portions and a middle portion of the impact absorbing member in both directions. The wing portions extending respectively from the middle portion in both directions are higher than the middle portion.

The base adaptor includes a base adaptor base portion, and a first base adaptor protrusion and a second base adaptor protrusion which protrude toward the connector from the base adaptor base portion. The first base adaptor protrusion and the second base adaptor protrusion are opposite to each other and are disposed apart from each other at a predetermined distance. The impact absorbing member is disposed between the first base adaptor protrusion and the second base adaptor protrusion.

The impact absorbing member includes an opening and has a long plate shape having a predetermined thickness in one direction. The impact absorbing member includes a first extension part and a second extension part which extend respectively from at least one of a plurality of surfaces forming the opening toward the opening. The first extension part and the second extension part are parallel with each other. A middle portion of the first extension part and a middle portion of the second extension part are curved to protrude toward the connector respectively.

The base adaptor includes a base adaptor base portion and a base adaptor protrusion which protrudes toward the connector from the base adaptor base portion. The base adaptor protrusion is disposed between the first extension part and the second extension part.

The impact absorbing member includes a first member and a second member. Each of the first member and the second member has a plate shape having a predetermined thickness and includes three or more bent portions. An end portion of the first member is bent toward the other end portion of the first member. An end portion of the second member is bent toward the other end portion of the second member. A recess is formed in a middle portion of an end portion of the first member, and an end portion of the second member is disposed in the recess.

The base adaptor includes a base adaptor base portion and a plurality of base adaptor catching portions which protrude toward the connector from the base adaptor base portion. The plurality of base adaptor catching portions fix the first member and the second member.

The impact absorbing member is a coil spring.

The base adaptor includes a base adaptor base portion, a base adaptor protrusion which protrudes toward the connector from the base adaptor base portion, and a fixing recess which is formed on one side of the base adaptor base portion. One side of the impact absorbing member is disposed in the fixing recess.

Another embodiment is a wiper system including: a base adaptor which is coupled to a wiper blade; an impact absorbing member which is fastened to the base adaptor; and a connector which is fastened to the impact absorbing member. The impact absorbing member includes a central portion, and a first wing portion and a second wing portion which are between both end portions of the central portion and extend from the central portion in both directions respectively. The first wing portion and the second wing portion have a curved shape with the same radius of curvature.

The base adaptor includes a base adaptor base portion, a first base adaptor sidewall and a second base adaptor sidewall which are formed in a longitudinal direction of the wiper blade and protrude toward the connector from the base adaptor base portion. The first base adaptor sidewall and the second base adaptor sidewall are opposite to each other and are disposed apart from each other at a predetermined distance. The impact absorbing member is disposed between the first base adaptor sidewall and the second base adaptor sidewall.

### BRIEF DESCRIPTION OF THE DRAWINGS

Fig. 1 is a perspective view showing a wiper system according to a first embodiment of the present invention;
Fig. 2 is an exploded perspective view of the wiper system shown in Fig. 1;
Fig. 3 is a perspective view showing the connector, the upper adaptor, the impact absorbing member, and the base adaptor shown in Fig. 2;
Fig. 4 shows the upper adaptor and the base adaptor shown in Fig. 2;
Fig. 5 shows that the upper adaptor, the impact absorbing member, and the base adaptor shown in Fig. 2 have been coupled;
Fig. 6 is an exploded perspective view of a wiper system according to a second embodiment of the present invention;
Fig. 7 is a perspective view showing the upper adaptor, the impact absorbing member, and the base adaptor shown in Fig. 6;
Fig. 8 shows that the upper adaptor, the impact absorbing member, and the base adaptor shown in Fig. 6 have been coupled;
Fig. 9 is an exploded perspective view of a wiper system according to a third embodiment of the present invention;
Fig. 10 shows the upper adaptor and the impact absorbing member shown in Fig. 9;
Fig. 11 shows that the upper adaptor, the impact absorbing member, and the base adaptor shown in Fig. 9 have been coupled;
Fig. 12 is an exploded perspective view of a wiper system according to a fourth embodiment of the present invention;
Fig. 13 shows the upper adaptor and the base adaptor shown in Fig. 12;
Fig. 14 is a cross sectional view of a cut away portion when the upper adaptor, the impact absorbing member, and the base adaptor shown in Fig. 12 have been coupled;
Fig. 15 is an exploded perspective view of a wiper system according to a fifth embodiment of the present invention;
Fig. 16 shows the upper adaptor and the base adaptor shown in Fig. 15;
Fig. 17 is a cross sectional view of a cut away portion when the upper adaptor, the impact absorbing member, and the base adaptor shown in Fig. 15 have been coupled;
Fig. 18 is an exploded perspective view of a wiper system according to a sixth embodiment of the present invention;
Fig. 19 shows the upper adaptor and the impact absorbing member shown in Fig. 18;
Fig. 20 shows that the upper adaptor, the impact absorbing member, and the base adaptor shown in Fig. 18 have been coupled;
Fig. 21 is an exploded perspective view of a wiper system according to a seventh embodiment of the present invention;
Fig. 22 shows the upper adaptor, the impact absorbing member, and the base adaptor shown in Fig. 21;
Fig. 23 is a front view showing that the upper adaptor, the impact absorbing member, and the base adaptor shown in Fig. 21 have been coupled;
Fig. 24 is an exploded perspective view of a wiper system according to an eighth embodiment of the present invention;
Fig. 25 is a bottom view of the upper adaptor shown in Fig. 24;
Fig. 26 is a perspective view showing the impact absorbing member and the base adaptor shown in Fig. 24;
Fig. 27 shows that the upper adaptor, the impact absorbing member, and the base adaptor shown in Fig. 24 have been coupled;
Fig. 28 is an exploded perspective view of a wiper system according to a ninth embodiment of the present invention;
Fig. 29 is a bottom perspective view of the upper adaptor shown in Fig. 28;
Fig. 30 is a cross sectional view of a cut away portion when the upper adaptor, the impact absorbing member, and the base adaptor shown in Fig. 28 have been coupled;
Fig. 31 is an exploded perspective view of a wiper system according to a tenth embodiment of the present invention; and
Fig. 32 shows that the impact absorbing member and the base adaptor shown in Fig. 31 have been coupled.

### DETAILED DESCRIPTION

Hereinafter, embodiments of the present invention will be described in detail with reference to accompanying drawings. However, the accompanied drawings are provided only for more easily describing the embodiments. It is easily understood by those skilled in the art that the spirit and scope of the present invention is not limited to the scope of the accompanied drawings. In the components of the present invention, detailed descriptions of what can be clearly understood and easily carried into practice through prior art by those skilled in the art will be omitted to avoid making the subject matter of the present invention unclear.

A wiper system according to the embodiments of the present invention uses an impact absorbing member, thereby absorbing the impact, external force, etc., transmitted to the wiper system and mitigating them. The impact absorbing member can be composed of, for example, a leaf spring or a coil spring.

Hereinafter, the wiper system according to the embodiments of the present invention will be described.

### <First Embodiment 10>

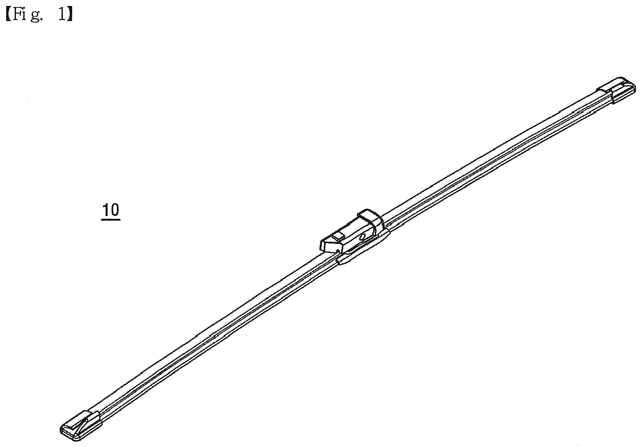

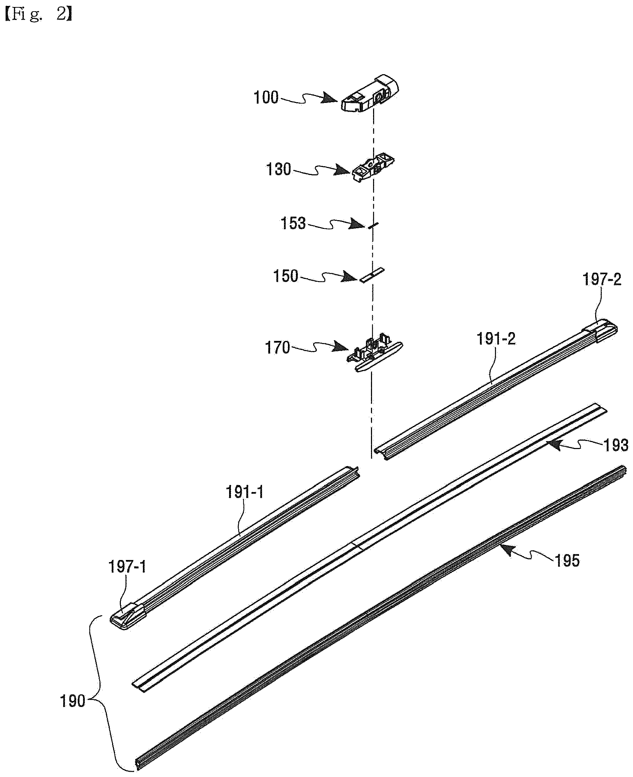

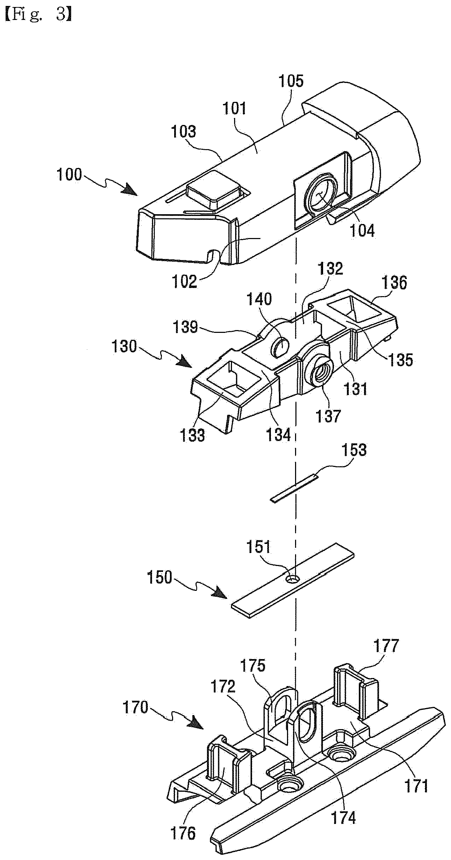

Fig. 1 is a perspective view showing a wiper system according to a first embodiment of the present invention. Fig. 2 is an exploded perspective view of the wiper system shown in Fig. 1. Fig. 3 is a perspective view showing a connector, an upper adaptor, an impact absorbing member, and a base adaptor shown in Fig. 2.

Referring to Figs. 1 to 3, the wiper system according to the first embodiment 10 of the present invention includes the connector 100, the upper adaptor 130, the impact absorbing member 150, the base adaptor 170, and a wiper blade 190. Hereinafter, the respective components will be described in detail.

The wiper blade 190 of the wiper system according to the first embodiment 10 of the present invention is defined as including a wiper rubber 195, a guide spring 193, a spoiler 191, and an end cap 197.

The wiper rubber 195 is disposed to slidably come into contact with the windshield glass of a vehicle and removes impurities on the windshield glass. The wiper rubber 195 extends in the longitudinal direction thereof and is made of an elastic material such as a rubber material or made of an elastic composite material.

The guide spring 193 may sustain and support the wiper rubber 195 in the longitudinal direction of the wiper rubber 195. The guide spring 193 may be curved with a predetermined curvature and may have a long thin bar shape. The wiper blade using such a guide spring 193 is known as a flat wiper blade or a flat-bar wiper blade in the art. As compared with other common wiper blades, the flat wiper blade has a less height and receives less air resistance. With a uniform load, the flat wiper blade can bring the wiper rubber 195 into contact (close contact) with the windshield.

The spoiler 191 is coupled to the wiper rubber 195 and/or the guide spring 193 and fixes them. Also, when the vehicle is traveling, the spoiler 191 can prevent the wiper system from rising. If the wiper system rises from the windshield, a wiping performance may be degraded.

The end cap 197 ensures that the wiper rubber 195 and the guide spring 193 are firmly coupled to each other. The end cap 197 is disposed on both end portions of the guide spring 193 in order that the wiper rubber 195 cannot slide and separate from the guide spring 193.

The wiper blade 190 of the wiper system 10 according to the first embodiment 10 of the present invention is commonly applied to a second embodiment 20 to a tenth embodiment 100 described below. Therefore, the description of the wiper blade 190 will be omitted in the second embodiment 20 to the tenth embodiment 100 described below.

Hereinafter, the connector 100, the upper adaptor 130, the base adaptor 170, and the impact absorbing member 150 of the wiper system 10 according to the first embodiment of the present invention will be described in turn.

The connector 100 of the wiper system 10 according to the first embodiment of the present invention is a component to which a wiper arm coupled to the upper portion of a pivot shaft is directly or indirectly connected.

The connector 100 may include a connector base portion 101, a first connector sidewall 102, and a second connector sidewall 103.

The connector base portion 101 may be formed as a flat surface and may be formed as a surface having a curvature or a step in accordance with the first embodiment of the present invention.

The first connector sidewall 102 and the second connector sidewall 103 may be formed in the longitudinal direction of the wiper blade 190 respectively. The first connector sidewall 102 and the second connector sidewall 103 may be formed to protrude or extend downward from the side end of the connector base portion 101. The second connector sidewall 103 is opposite to the first connector sidewall 102.

The first connector sidewall 102 and the second connector sidewall 103 may be formed as a flat surface and may be formed as a surface having a curvature or a step in accordance with the first embodiment of the present invention.

The connector 100 may be connected to the below-described upper adaptor 130. Specifically, holes 104 and 105 may be formed in the first connector sidewall 102 and the second connector sidewall 103, respectively. A first protrusion 137 and a third protrusion 139 of the upper adaptor 130 are inserted into the holes 104 and 105 respectively, so that the connector 100 and the upper adaptor 130 can be fastened to each other. Therefore, the connector 100 and the upper adaptor 130 can be rotated with respect to each other about the first protrusion 137 and the third protrusion 139.

The connector 100 may include a predetermined space (not shown) surrounded by the connector base portion 101, the first connector sidewall 102, and the second connector sidewall 103. The upper adaptor 130 may be disposed in the predetermined space.

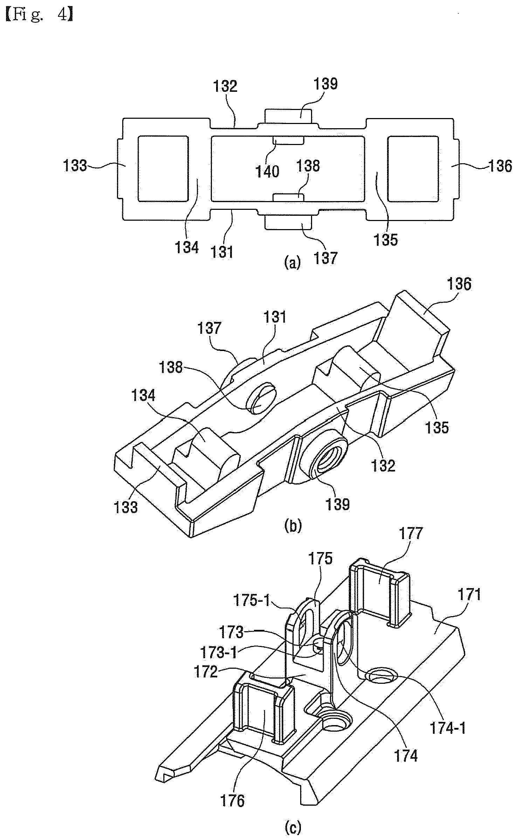

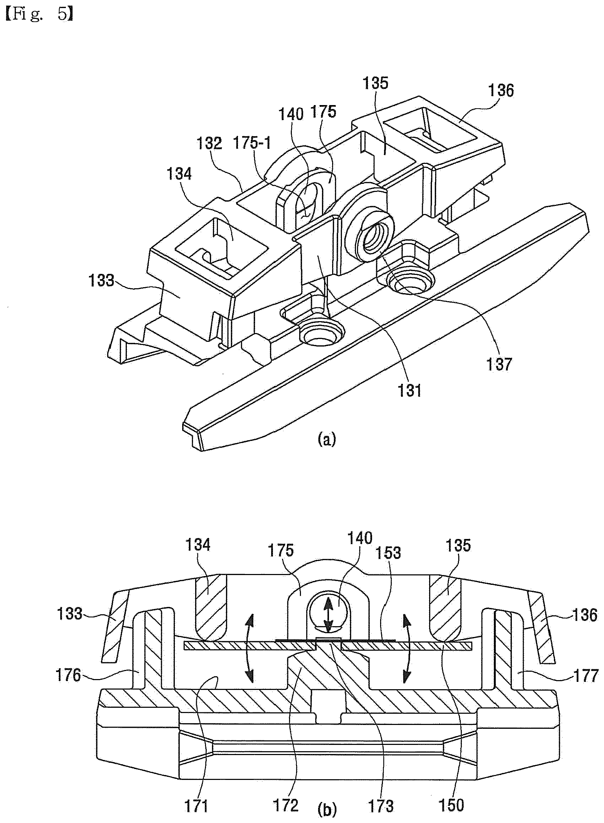

Fig. 4 shows the upper adaptor and the base adaptor shown in Fig. 2. Fig. 5 shows that the upper adaptor, the impact absorbing member, and the base adaptor shown in Fig. 2 have been coupled. A plan view of the upper adaptor 130 is shown in (a) of Fig. 4. A bottom perspective view of the upper adaptor 130 is shown in (b) of Fig. 4. A perspective view of the base adaptor 170 is shown in (c) of Fig. 4. A perspective view when the upper adaptor 130, the impact absorbing member 150, and the base adaptor 170 have been coupled is shown in (a) of Fig. 5. A cross sectional view of a cut away portion of (a) of Fig. 5 is shown in (b) of Fig. 5. Related descriptions will be provided with reference to Figs. 4 and 5.

The upper adaptor 130 of the wiper system 10 according to the first embodiment of the present invention may include a first upper adaptor sidewall 131 and a second upper adaptor sidewall 132 which are formed in the longitudinal direction of the wiper blade 190. The first upper adaptor sidewall 131 and the second upper adaptor sidewall 132 are opposite to each other and are disposed apart from each other at a predetermined distance.

The first upper adaptor sidewall 131 and the second upper adaptor sidewall 132 may be formed as a flat surface and may be formed as a surface having a curvature or a step in accordance with the first embodiment of the present invention.

The upper adaptor 130 may include a first connection member 133, a second connection member 134, a third connection member 135, and a fourth connection member 136 which are between the first upper adaptor sidewall 131 and the second upper adaptor sidewall 132 and connect the first upper adaptor sidewall 131 and the second upper adaptor sidewall 132.

The first connection member 133, the second connection member 134, the third connection member 135, and the fourth connection member 136 may have a flat plate shape having a predetermined thickness.

The first connection member 133 and the fourth connection member 136 may be disposed on both end portions of the first upper adaptor sidewall 131 and the second upper adaptor sidewall 132.

The second connection member 134 may be disposed between the first connection member 133 and the middle portion of the upper adaptor 130 in the longitudinal direction of the wiper blade 190. The third connection member 135 may be disposed between the middle portion of the upper adaptor 130 and the fourth connection member 136 in the longitudinal direction of the wiper blade 190.

The below-described impact absorbing member 150 may be disposed below the second connection member 134 and the third connection member 135.

The first protrusion 137 and a second protrusion 138 may be formed on the outer surface and the inner surface of the middle portion of the first upper adaptor sidewall 131 in the longitudinal direction of the wiper blade 190 respectively.

The third protrusion 139 and a fourth protrusion 140 may be formed on the outer surface and the inner surface of the middle portion of the second upper adaptor sidewall 132 in the longitudinal direction of the wiper blade 190 respectively.

The first protrusion 137 and the third protrusion 139 may be respectively inserted into the holes 104 and 105, which are formed respectively in the first connector sidewall 102 and the second connector sidewall 103 of the connector 100. Therefore, the connector 100 and the upper adaptor 130 can be rotated with respect to each other about the first protrusion 137 and the third protrusion 139.

The second protrusion 138 and the fourth protrusion 140 may be respectively inserted into holes 174-1 and 175-1, which are respectively formed in a first base adaptor sidewall 174 and a second base adaptor sidewall 175 of the below-described base adaptor 170. Therefore, the upper adaptor 130 and the base adaptor 170 can be rotated with respect to each other about the second protrusion 138 and the fourth protrusion 140.

The base adaptor 170 of the wiper system 10 according to the first embodiment of the present invention may include a base adaptor base portion 171, a first base adaptor protrusion 172 which protrudes toward the connector 100 from the middle portion of the base adaptor base portion 171, and a second base adaptor protrusion 173 which protrudes toward the connector 100 from the top surface of the first base adaptor protrusion 172.

The base adaptor base portion 171 may be formed as a flat surface and may be formed as a surface having a curvature or a step in accordance with the first embodiment of the present invention.

The second base adaptor protrusion 173 has a shape protruding toward the connector 100 from the middle portion of top surface of the first base adaptor protrusion 172. A groove 173-1 may be formed in the side surface of the second base adaptor protrusion 173.

A below-described fixing pin 153 is inserted into the groove 173-1 formed in the side surface of the second base adaptor protrusion 173, thereby fixing the impact absorbing member 150 to the second base adaptor protrusion 173.

The shapes of the first base adaptor protrusion 172 and the second base adaptor protrusion 173 are not specially determined. The first base adaptor protrusion 172 and the second base adaptor protrusion 173 may have various shapes. However, the shape of the second base adaptor protrusion 173 as viewed from above may be in correspondence with the shape of a below-described hole 151 formed in the middle portion of the impact absorbing member 150.

The base adaptor 170 may further include the first base adaptor sidewall 174 and the second base adaptor sidewall 175.

The first base adaptor sidewall 174 and the second base adaptor sidewall 175 may be formed in the longitudinal direction of the wiper blade 190 respectively and may be formed to protrude or extend toward the connector 100 from the side end of the first base adaptor protrusion 172. The second base adaptor sidewall 175 is opposite to the first base adaptor sidewall 174.

The holes 174-1 and 175-1 may be formed in the first base adaptor sidewall 174 and the second base adaptor sidewall 175 respectively. The holes 174-1 and 175-1 may be opposite to each other. The second protrusion 138 and the fourth protrusion 140 of the upper adaptor 130 are inserted into the holes 174-1 and 175-1 respectively, so that the upper adaptor 130 and the base adaptor 170 can be connected to each other. Also, the upper adaptor 130 and the base adaptor 170 can be rotated with respect to each other about the second protrusion 138 and the fourth protrusion 140.

The holes 174-1 and 175-1 formed in the first base adaptor sidewall 174 and the second base adaptor sidewall 175 respectively may be long up and down. Therefore, the upper adaptor 130 is able to move up and down along the long up and down holes 174-1 and 175-1. Specifically, the second protrusion 138 and the fourth protrusion 140 of the upper adaptor 130 inserted into the holes 174-1 and 175-1 is able to move up and down along the long up and down holes 174-1 and 175-1. Also, the transverse widths or longitudinal widths of the holes 174-1 and 175-1 may be the same as each other.

In summary, since the second protrusion 138 and the fourth protrusion 140 of the upper adaptor 130 are disposed in the holes 174-1 and 175-1 formed respectively in the first base adaptor sidewall 174 and the second base adaptor sidewall 175, the upper adaptor 130 is able to rotate about the second protrusion 138 and the fourth protrusion 140 and is also able to move up and down. When impact is transmitted to or generated in the wiper system, the upper adaptor 130 is able to absorb and mitigate the impact by rotating and moving up and down.

The base adaptor 170 may further include a third base adaptor protrusion 176 and a fourth base adaptor protrusion 177.

The third base adaptor protrusion 176 and the fourth base adaptor protrusion 177 may be formed to protrude or extend toward the connector 100 from the base adaptor base portion 171 respectively.

The side surfaces of the third base adaptor protrusion 176 and the fourth base adaptor protrusion 177 may be formed as a flat surface and may be formed as a surface having a curvature or a step in accordance with the first embodiment of the present invention.

The third base adaptor protrusion 176 may be disposed between the first connection member 133 and the second connection member 134 of the upper adaptor 130. The fourth base adaptor protrusion 177 may be disposed between the third connection member 135 and the fourth connection member 136 of the upper adaptor 130.

According to the first embodiment of the present invention, the third base adaptor protrusion 176 and the fourth base adaptor protrusion 177 may not be present.

The base adaptor 170 may be coupled to the wiper blade 190. Specifically, the base adaptor 170 may be disposed in the middle portion of the guide spring 193 and fastened to the guide spring 193.

The impact absorbing member 150 of the wiper system 10 according to the first embodiment of the present invention may have a predetermined length in one direction. For example, the impact absorbing member 150 may have a long plate shape having a predetermined thickness in one direction or may have a round bar shape such as wire or rod. The impact absorbing member 150 has elasticity which intends to cause the impact absorbing member 150 to return its original shape when the impact or external force is removed from the impact absorbing member 150 deformed by the impact or external force. The impact absorbing member 150 may be made of various elastic materials. The characteristics and material of the impact absorbing member 150 are applied in the same manner to the following other embodiments 20 to 100.

The impact absorbing member 150 which has a long plate shape having a predetermined thickness in one direction will be described as follows.

The impact absorbing member 150 may include the hole 151 formed in the middle portion thereof. Specifically, the hole 151 may be formed in the middle portion of the impact absorbing member 150 in the longitudinal direction of the wiper blade 190.

The impact absorbing member 150 may be disposed under the second connection member 134 and the third connection member 135 of the upper adaptor 130 and may be disposed on the top surface of the first base adaptor protrusion 172 of the base adaptor 170. Also, the impact absorbing member 150 may be coupled to the second base adaptor protrusion 173 of the base adaptor 170. Specifically, the second base adaptor protrusion 173 of the base adaptor 170 may be arranged to pass through the hole 151 of the impact absorbing member 150.

The impact absorbing member 150 may be disposed on the top surface of the first base adaptor protrusion 172 of the base adaptor 170 such that the second base adaptor protrusion 173 of the base adaptor 170 passes through the hole 151 of the impact absorbing member 150. In the state where the impact absorbing member 150 has been disposed on the top surface of the first base adaptor protrusion 172, the fixing pin 153 is contacted with the top surface of the impact absorbing member 150 and then is fitted in the groove 173-1 formed in the side surface of the second base adaptor protrusion 173, so that the impact absorbing member 150 can be fixed to the second base adaptor protrusion 173.

Depending on the method of fixing the impact absorbing member 150 to the top surface of the first base adaptor protrusion 172, the fixing pin 153 and the groove 173-1 formed in the side surface of the second base adaptor protrusion 173 may not be present. For example, after the second base adaptor protrusion 173 is inserted into the hole 151 of the impact absorbing member 150, the upper portion of the second base adaptor protrusion 173 is deformed by pressing the upper portion of the second base adaptor protrusion 173, so that the impact absorbing member 150 can be fixed to the second base adaptor protrusion 173.

Even when the impact absorbing member 150 has a round bar shape having a predetermined length in one direction such as wire or rod, the impact absorbing member 150 can be coupled to the second base adaptor protrusion 173. In this case, however, the fixing pin 153 and the groove 173-1 formed in the side surface of the second base adaptor protrusion 173 may not be present. A hole (not shown) instead of the groove 173-1 is formed in the side surface of the second base adaptor protrusion 173 and a round bar such as wire or rod is inserted into the hole, and then the impact absorbing member 150 can be fixed to the second base adaptor protrusion 173 by pressing and deforming the second base adaptor protrusion 173 at the middle portion of the round bar.

In addition to the foregoing method, it is possible to use various methods for fixing the impact absorbing member 150 to the first base adaptor protrusion 172 in accordance with the first embodiment of the present invention.

Since the second protrusion 138 and the fourth protrusion 140 of the upper adaptor 130 are inserted into the holes 174-1 and 175-1 formed respectively in the first base adaptor sidewall 174 and the second base adaptor sidewall 175 of the base adaptor 170, the upper adaptor 130 and the base adaptor 170 can be rotated with respect to each other about the second protrusion 138 and the fourth protrusion 140 and can also move up and down with respect to each other. Here, the impact absorbing member 150 is disposed under the second connection member 134 and the third connection member 135 of the upper adaptor 130, thereby contacting the second connection member 134 and/or the third connection member 135.

During the operation of the wiper, when the impact is transmitted to or generated in the wiper system or when the external force is applied to the wiper system, the upper adaptor 130 and the base adaptor 170 may be rotated or move with respect to each other. Here, the impact absorbing member 150 is able to absorb or mitigate the impact by using elasticity.

### <Second Embodiment 20>

Hereinafter, a connector 200, an upper adaptor 230, a base adaptor 270, and an impact absorbing member 250 of a wiper system 20 according to the second embodiment of the present invention will be described in turn.

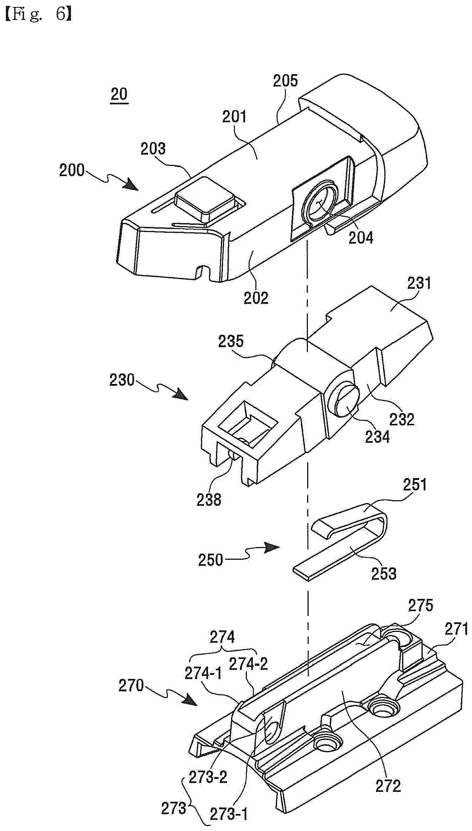

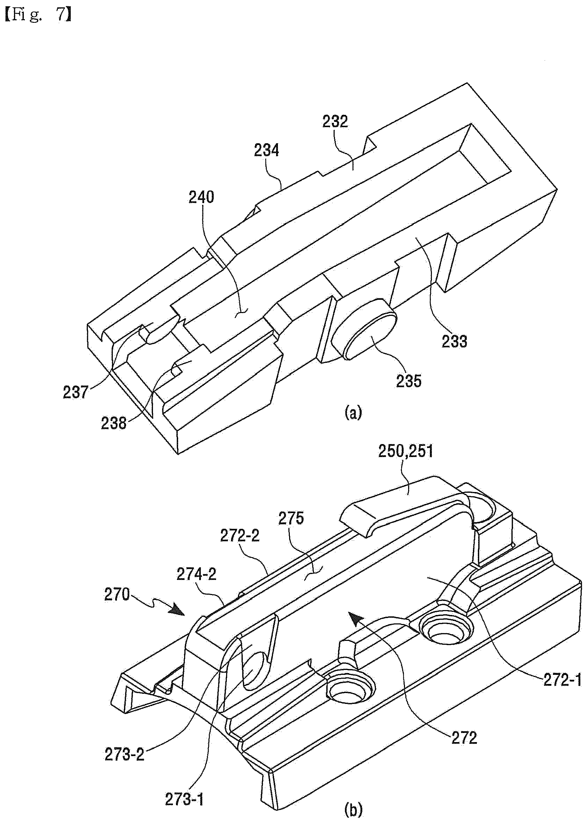

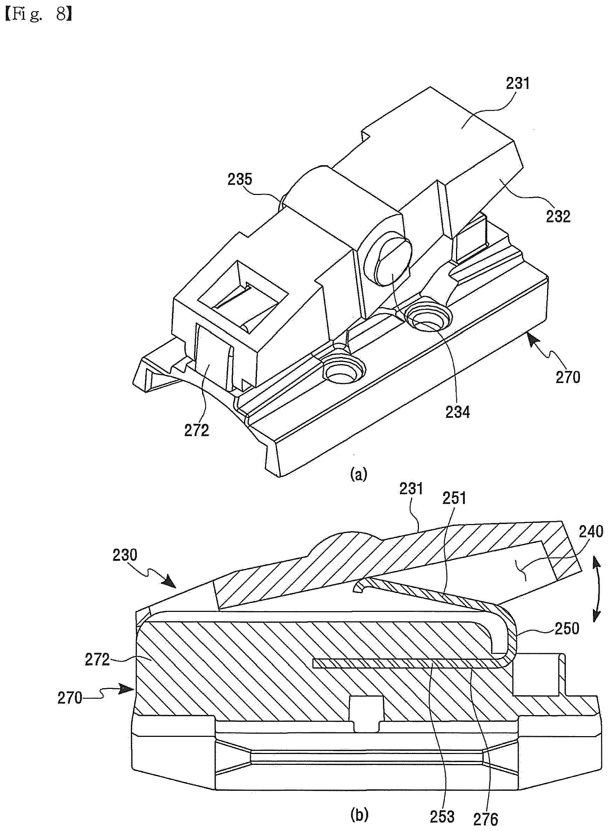

Fig. 6 is an exploded perspective view of the wiper system according to the second embodiment of the present invention. Fig. 7 is a perspective view showing the upper adaptor, the impact absorbing member, and the base adaptor shown in Fig. 6. Fig. 8 shows that the upper adaptor, the impact absorbing member, and the base adaptor shown in Fig. 6 have been coupled. A perspective view of the upper adaptor 230 viewed from below is shown in (a) of Fig. 7. A perspective view when the impact absorbing member 250 and the base adaptor 270 have been coupled is shown in (b) of Fig. 7. A perspective view when the upper adaptor 230, the impact absorbing member 250, and the base adaptor 270 have been coupled is shown in (a) of Fig. 8. A cross sectional view of a cut away portion of (a) of Fig. 8 is shown in (b) of Fig. 8. Related descriptions will be provided with reference to Figs. 6 and 8.

The connector 200 of the wiper system 20 according to the second embodiment of the present invention is the same as the connector 100 of the wiper system 10 according to the first embodiment, the detailed descriptions of the same parts of as those of the first embodiment will be omitted.

The connector 200 may be connected to the below-described upper adaptor 230. Specifically, holes 204 and 205 may be formed in a first connector sidewall 202 and a second connector sidewall 203 of the connector 200, respectively. A first protrusion 234 and a second protrusion 235 of the upper adaptor 230 are inserted into the holes 204 and 205 respectively, so that the connector 200 and the upper adaptor 230 can be fastened to each other. Therefore, the connector 200 and the upper adaptor 230 can be rotated with respect to each other about the first protrusion 234 and the second protrusion 235.

The upper adaptor 230 of the wiper system 20 according to the second embodiment of the present invention may include an upper adaptor base portion 231, a first upper adaptor sidewall 232, and a second upper adaptor sidewall 233.

The upper adaptor base portion 231 may be formed as a flat surface and may be formed as a surface having a curvature, a step, or a hole in accordance with the second embodiment of the present invention.

The first upper adaptor sidewall 232 and the second upper adaptor sidewall 233 are formed in the longitudinal direction of the wiper blade 190 respectively. The first upper adaptor sidewall 232 and the second upper adaptor sidewall 233 may be formed to protrude or extend downward from the side end of the upper adaptor base portion 231. The second upper adaptor sidewall 233 is opposite to the first upper adaptor sidewall 232.

The first upper adaptor sidewall 232 and the second upper adaptor sidewall 233 may be formed as a flat surface and may be formed as a surface having a curvature or a step in accordance with the second embodiment of the present invention.

The upper adaptor 230 may include a predetermined space 240 surrounded by the upper adaptor base portion 231, the first upper adaptor sidewall 232, and the second upper adaptor sidewall 233. A portion of the below-described impact absorbing member 250 may be received in the predetermined space 240.

The first protrusion 234 may be formed to protrude from the middle portion of the outer surface of the first upper adaptor sidewall 232 in the longitudinal direction of the wiper blade 190. Also, the second protrusion 235 may be formed to protrude from the middle portion of the outer surface of the second upper adaptor sidewall 233 in the longitudinal direction of the wiper blade 190.

The first protrusion 234 and the second protrusion 235 may be respectively inserted into the holes 204 and 205, which are formed respectively in the first connector sidewall 202 and the second connector sidewall 203 of the connector 200. Therefore, the connector 200 and the upper adaptor 230 can be rotated with respect to each other about the first protrusion 234 and the second protrusion 235.

A third protrusion 237 may be formed to protrude from one side of the inner surface of the first upper adaptor sidewall 232 in the longitudinal direction of the wiper blade 190. Also, a fourth protrusion 238 may be formed to protrude from one side of the inner surface of the second upper adaptor sidewall 233 in the longitudinal direction of the wiper blade 190. The third protrusion 237 and the fourth protrusion 238 may be formed to be opposite to each other.

The third protrusion 237 and the fourth protrusion 238 may be respectively inserted into a first side recess 273 and a second side recess 274 which are formed in a base adaptor protrusion of the below-described base adaptor 270. Therefore, the upper adaptor 230 and the base adaptor 270 can be rotated with respect to each other about the third protrusion 237 and the fourth protrusion 238.

The base adaptor 270 of the wiper system 20 according to the second embodiment of the present invention may include a base adaptor base portion 271, a base adaptor protrusion 272 which protrudes toward the connector 200 from the base adaptor base portion 271, and a receiving recess formed between the base adaptor base portion 271 and the base adaptor protrusion 272.

The base adaptor base portion 271 may be formed as a flat surface and may be formed as a surface having a curvature or a step in accordance with the second embodiment of the present invention.

The base adaptor protrusion 272 may include a first side surface 272-1 and a second side surface 272-2. Each of the first side surface 272-1 and the second side surface 272-2 is one side surface forming the base adaptor protrusion 272 in the longitudinal direction of the wiper blade 190. The first side surface 272-1 and the second side surface 272-2 are opposite to each other.

The first side surface 272-1 may include the first side recess 273 formed in one side thereof, and the second side surface 272-2 may include the second side recess 274 formed in one side thereof. The first side recess 273 and the second side recess 274 are formed opposite to each other.

The third protrusion 237 of the upper adaptor 230 is inserted into the first side recess 273, and the fourth protrusion 238 of the upper adaptor 230 is inserted into the second side recess 274. As a result, the upper adaptor 230 and the base adaptor 270 can be fastened to each other and can be rotated with respect to each other about the third protrusion 237 and the fourth protrusion 238.

The first side recess 273 and the second side recess 274 may respectively include recesses 273-2 and 274-2 which have a shallow depth and serve to guide so as to cause the third protrusion 237 and the fourth protrusion 238 of the upper adaptor 230 to be easily inserted. The first side recess 273 and the second side recess 274 may respectively include recesses 273-1 and 274-1 which are formed under the shallow recesses 273-2 and 274-2 and have a greater depth so as to cause the third protrusion 237 and the fourth protrusion 238 inserted into the shallow recesses 273-2 and 274-2 not to be easily separated. The third protrusion 237 and the fourth protrusion 238 of the upper adaptor 230 can be rotated in the state of being fastened to the deeper recesses 273-1 and 274-1. According to the embodiment of the present invention, the recesses 273-2 and 274-2 having a shallow depth may not be present.

The base adaptor 270 may include the receiving recess 276 formed between the base adaptor base portion 271 and the base adaptor protrusion 272. One side 253 of the below-described impact absorbing member 250 may be inserted into the receiving recess 276.

Since one side of the impact absorbing member 250 is inserted and fixed to the receiving recess 276, the shape of the vertical cross section of the receiving recess 276 may be the same as the shape of the vertical cross section of the one side of the impact absorbing member 250. However, the shape of the receiving recess 276 is not limited to this. The receiving recess 276 may have other shapes as long as the one side of the impact absorbing member 250 is inserted and fixed.

The upper portion of the base adaptor protrusion 272 may be inserted into the predetermined space 240 of the upper adaptor 230.

The other side 251 of impact absorbing member 250 may be disposed on the top surface of the base adaptor protrusion 272.

A guide groove 275 may be formed in the top surface of the base adaptor protrusion 272.

The guide groove 275 may be entirely or partially formed in the top surface of the base adaptor protrusion 272. According to the second embodiment of the present invention, the guide groove 275 may not be formed.

When the other side 251 of the impact absorbing member 250 is bent by elasticity due to the impact or external force, the guide groove 275 can receive the other side 251 of the impact absorbing member 250.

The base adaptor 270 may be coupled to the wiper blade 190. Specifically, the base adaptor 270 may be disposed in the middle portion of the guide spring 193 and may be fastened to the guide spring 193.

The impact absorbing member 250 of the wiper system 20 according to the second embodiment of the present invention may have a predetermined length and at least one bent portion. For example, the impact absorbing member 250 may have a plate shape having a predetermined thickness or may have a round bar shape such as wire or rod. The impact absorbing member 250 have at least one bent portion. Specifically, when the impact absorbing member 250 have a plate shape having a predetermined thickness, the horizontal length of the impact absorbing member 250 is greater than the vertical length of the impact absorbing member 250, and the impact absorbing member 250 may have at least one bent portion.

The one side 253 and the other side 251 of the impact absorbing member 250 may be opposite to each other by the bent portion.

The one side 253 of the impact absorbing member 250 may be disposed in the receiving recess 276 of the base adaptor 270, and the other side 251 of the impact absorbing member 250 may be disposed on the top surface of the base adaptor protrusion 272 of the base adaptor 270.

Since the third protrusion 237 and the fourth protrusion 238 of the upper adaptor 230 are inserted into the first side recess 273 and the second side recess 274 which are formed in the first side surface 272-1 and the second side surface 272-2 of the base adaptor 270 respectively, the upper adaptor 230 and the base adaptor 270 can be rotated with respect to each other about the third protrusion 237 and the fourth protrusion 238. Here, the other side 251 of the impact absorbing member 250 may be disposed in the predetermined space 240 of the upper adaptor 230 and contact the bottom surface of the upper adaptor base portion 231 of the upper adaptor 230.

During the operation of the wiper, when the impact is transmitted to or generated in the wiper system or when the external force is applied to the wiper system, the upper adaptor 230 and the base adaptor 270 may be rotated with respect to each other. Here, when the other side 251 of the impact absorbing member 250 is bent by the impact or external force, the impact absorbing member 250 is able to absorb or mitigate the impact by using elasticity.

### <Third Embodiment 30>

Hereinafter, a connector 300, an upper adaptor 330, a base adaptor 370, and an impact absorbing member 350 of a wiper system 30 according to the third embodiment of the present invention will be described in turn.

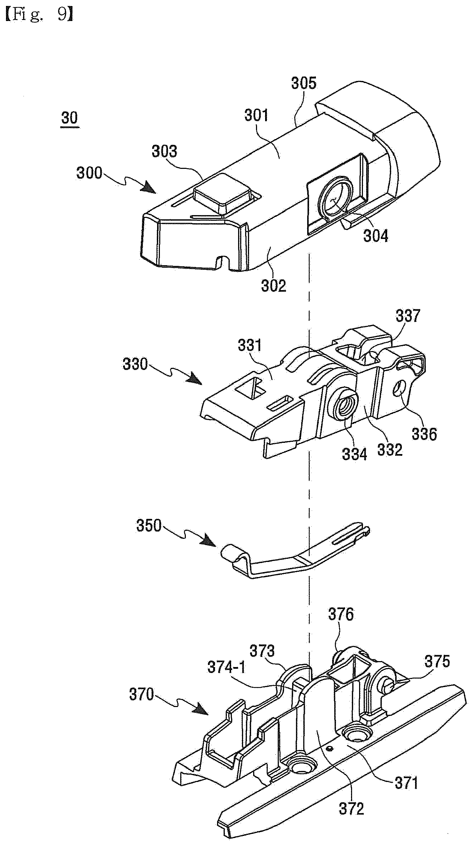

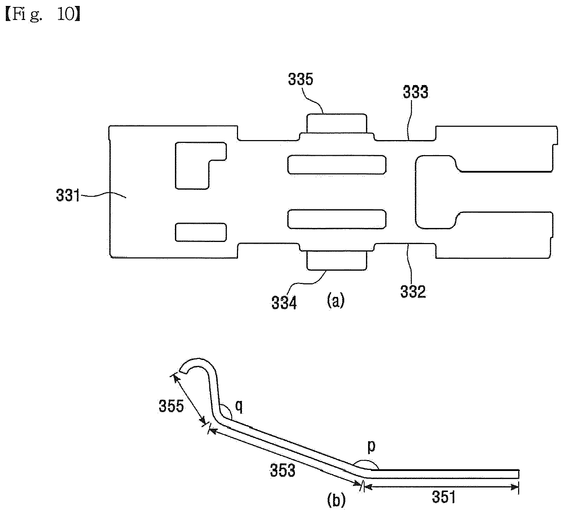

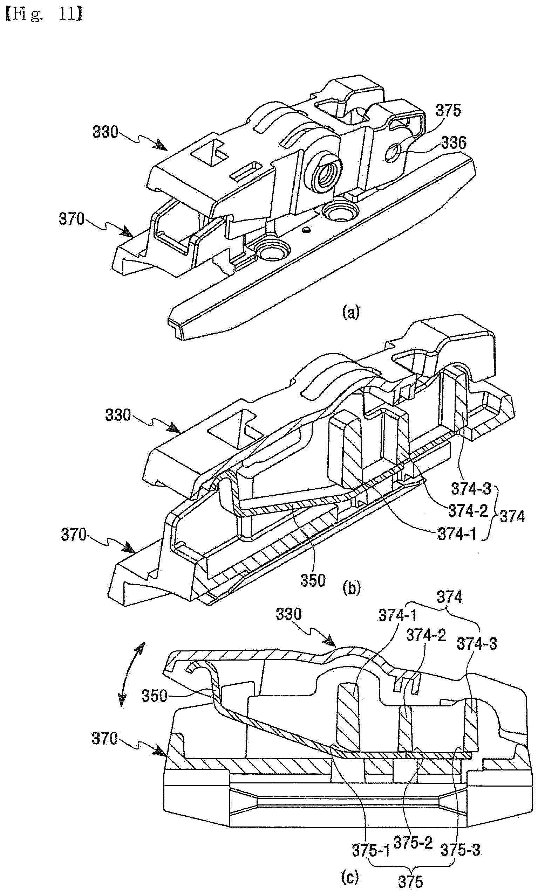

Fig. 9 is an exploded perspective view of the wiper system according to the third embodiment of the present invention. Fig. 10 shows the upper adaptor and the impact absorbing member shown in Fig. 9. Fig. 11 shows that the upper adaptor, the impact absorbing member, and the base adaptor shown in Fig. 9 have been coupled. A plan view of the upper adaptor 330 is shown in (a) of Fig. 10. A front view of the impact absorbing member 350 is shown in (b) of Fig. 10. A perspective view when the upper adaptor 330, the impact absorbing member 350, and the base adaptor 370 have been coupled is shown in (a) of Fig. 11. A perspective view of a cut away portion of (a) of Fig. 11 is shown in (b) of Fig. 11. A cross sectional view of a cut away portion of (a) of Fig. 11 is shown in (c) of Fig. 11. Related descriptions will be provided with reference to Figs. 9 to 11.

The connector 300 of the wiper system 30 according to the third embodiment of the present invention is the same as the connector 100 of the wiper system 10 according to the first embodiment, the detailed descriptions of the same parts of as those of the first embodiment will be omitted.

The connector 300 may be connected to the below-described upper adaptor 330. Specifically, holes 304 and 305 may be formed in a first connector sidewall 302 and a second connector sidewall 303 of the connector 300, respectively. A first protrusion 334 and a second protrusion 335 of the upper adaptor 330 are inserted into the holes 304 and 305 respectively, so that the connector 300 and the upper adaptor 330 can be fastened to each other. Therefore, the connector 300 and the upper adaptor 330 can be rotated with respect to each other about the first protrusion 334 and the second protrusion 335.

The upper adaptor 330 of the wiper system 30 according to the third embodiment of the present invention may include an upper adaptor base portion 331, a first upper adaptor sidewall 332, and a second upper adaptor sidewall 333.

The upper adaptor base portion 331 may be formed as a flat surface and may be formed as a surface having a curvature, a step, or a hole in accordance with the third embodiment of the present invention.

The first upper adaptor sidewall 332 and the second upper adaptor sidewall 333 may be formed in the longitudinal direction of the wiper blade 190 respectively. The first upper adaptor sidewall 332 and the second upper adaptor sidewall 333 may be formed to protrude or extend downward from the side end of the upper adaptor base portion 331. The second upper adaptor sidewall 333 is opposite to the first upper adaptor sidewall 332.

The first upper adaptor sidewall 332 and the second upper adaptor sidewall 333 may be formed as a flat surface and may be formed as a surface having a curvature or a step in accordance with the third embodiment of the present invention.

The upper adaptor 330 may include a predetermined space (not shown) surrounded by the upper adaptor base portion 331, the first upper adaptor sidewall 332, and the second upper adaptor sidewall 333. A portion of the below-described base adaptor 370 may be received in the predetermined space.

The first protrusion 334 may be formed to protrude from the middle portion of the outer surface of the first upper adaptor sidewall 332 in the longitudinal direction of the wiper blade 190. Also, the second protrusion 335 may be formed to protrude from the middle portion of the outer surface of the second upper adaptor sidewall 333 in the longitudinal direction of the wiper blade 190.

The first protrusion 334 and the second protrusion 335 may be respectively inserted into the holes 304 and 305, which are formed respectively in the first connector sidewall 302 and the second connector sidewall 303 of the connector 300. Therefore, the connector 300 and the upper adaptor 330 can be rotated with respect to each other about the first protrusion 334 and the second protrusion 335.

A first sidewall hole 336 passing through the first upper adaptor sidewall 332 may be formed in one side of the first upper adaptor sidewall 332 in the longitudinal direction of the wiper blade 190. Also, a second sidewall hole 337 passing through the second upper adaptor sidewall 333 may be formed in one side of the second upper adaptor sidewall 333 in the longitudinal direction of the wiper blade 190. The first sidewall hole 336 and the second sidewall hole 337 may be formed to be opposite to each other.

A first sidewall protrusion 375 and a second sidewall protrusion 376 which are respectively formed on one side of a first base adaptor sidewall 372 of the below-described base adaptor 370 and on one side of a second base adaptor sidewall 373 of the below-described base adaptor 370 may be inserted into the first sidewall hole 336 and the second sidewall hole 337 respectively. Therefore, the upper adaptor 330 and the base adaptor 370 can be rotated with respect to each other about the first sidewall protrusion 375 and the second sidewall protrusion 376.

The base adaptor 370 of the wiper system 30 according to the third embodiment of the present invention may include a base adaptor base portion 371, the first base adaptor sidewall 372 and the second base adaptor sidewall 373 which are formed in the longitudinal direction of the wiper blade 190 and protrude toward the connector 300 from the base adaptor base portion 371. The first base adaptor sidewall 372 and the second base adaptor sidewall 373 are opposite to each other and are disposed apart from each other at a predetermined distance.

The base adaptor base portion 371 may be formed as a flat surface and may be formed as a surface having a curvature, a step, or a recess in accordance with the third embodiment of the present invention.

The first base adaptor sidewall 372 and the second base adaptor sidewall 373 may be formed in the longitudinal direction of the wiper blade 190 respectively and may be formed to protrude or extend toward the connector 300 from the base adaptor base portion 371.

The first base adaptor sidewall 372 and the second base adaptor sidewall 373 may be formed as a flat surface and may be formed as a surface having a curvature or a step in accordance with the third embodiment of the present invention.

The first sidewall protrusion 375 may be formed to protrude from one side of the outer surface of the first base adaptor sidewall 372 in the longitudinal direction of the wiper blade 190. Also, the second sidewall protrusion 376 may be formed to protrude from one side of the outer surface of the second base adaptor sidewall 373 in the longitudinal direction of the wiper blade 190. The first sidewall protrusion 375 and the second sidewall protrusion 376 are formed opposite to each other.

The first sidewall protrusion 375 is inserted into the first sidewall hole 336 of the upper adaptor 330 and the second sidewall protrusion 376 is inserted into the second sidewall hole 337 of the upper adaptor 330, so that the upper adaptor 330 and the base adaptor 370 can be fastened to each other. Therefore, the upper adaptor 330 and the base adaptor 370 can be rotated with respect to each other about the first sidewall protrusion 375 and the second sidewall protrusion 376.

One or more connection members 374 which connect the first base adaptor sidewall 372 and the second base adaptor sidewall 373 may be formed between the first base adaptor sidewall 372 and the second base adaptor sidewall 373.

The connection member 374 may be formed integrally with the first base adaptor sidewall 372 and/or the second base adaptor sidewall 373 or may be separately manufactured and coupled to the first base adaptor sidewall 372 and/or the second base adaptor sidewall 373.

The connection member 374 may have a long plate shape having a predetermined thickness in one direction. However, the shape of the connection member 374 is not specially determined. The connection member 374 may have various shapes.

A first portion 351 of the below-described impact absorbing member 350 may be disposed under the connection member 374.

Predetermined spaces 375-1, 375-2, and 375-3 may be formed under one or more connection members 374-1, 374-2, and 374-3. The first portion 351 of the impact absorbing member 350 may be inserted into the predetermined spaces 375-1, 375-2, and 375-3. The first portion 351 of the impact absorbing member 350 disposed in the predetermined spaces 375-1, 375-2, and 375-3 may be fixed by one or more connection members 374-1, 374-2, and 374-3.

The base adaptor 370 may be coupled to the wiper blade 190. Specifically, the base adaptor 370 may be disposed in the middle portion of the guide spring 193 and fastened to the guide spring 193.

The impact absorbing member 350 of the wiper system 30 according to the third embodiment of the present invention may have a predetermined length and two or more bent portions. For example, the impact absorbing member 350 may have a plate shape having a predetermined thickness or may have a round bar shape such as wire or rod. The impact absorbing member 350 have two or more bent portions. Specifically, when the impact absorbing member 350 have a plate shape having a predetermined thickness, the horizontal length of the impact absorbing member 350 is greater than the vertical length of the impact absorbing member 350, and the impact absorbing member 350 may have two or more bent portions.

The impact absorbing member 350 may include the first portion 351, a second portion 353, and a third portion 355 which are separated by the bent portion.

An angle formed by the first portion 351 and the second portion 353 and an angle formed by the second portion 353 and the third portion 355 are obtuse angles p and q respectively. The obtuse angle p formed by the first portion 351 and the second portion 353 may or may not be the same as the obtuse angle q formed by the second portion 353 and the third portion 355.

Since the formed by the first portion 351 and the second portion 353 is the obtuse angle p and the formed by the second portion 353 and the third portion 355 is the obtuse angle q, the second portion 353 is not disposed over the first portion 351 and the third portion 355 is not disposed over the second portion 353.

The impact absorbing member 350 may be disposed between the first base adaptor sidewall 372 and the second base adaptor sidewall 373 of the base adaptor 370. Specifically, the first portion 351 of the impact absorbing member 350 may be inserted into the predetermined space 375 formed under the connection member 374. The connection member 374 can fix the first portion 351 of the impact absorbing member 350 inserted into the predetermined space 375.

Since the first sidewall protrusion 375 and the second sidewall protrusion 376 of the base adaptor 370 are inserted into the first sidewall hole 336 and the second sidewall hole 337 of the upper adaptor 330, the upper adaptor 330 and the base adaptor 370 can be rotated with respect to each other about the first sidewall protrusion 375 and the second sidewall protrusion 376. Here, the third portion 355 of the impact absorbing member 350 may contact the bottom surface of the upper adaptor base portion 331 of the upper adaptor 330.

During the operation of the wiper, when the impact is transmitted to or generated in the wiper system or when the external force is applied to the wiper system, the upper adaptor 330 and the base adaptor 370 may be rotated with respect to each other. Here, when the impact absorbing member 350 is bent by the impact or external force, the impact absorbing member 350 is able to absorb or mitigate the impact by using elasticity.

### <Fourth Embodiment 40 >

Hereinafter, a connector 400, an upper adaptor 430, a base adaptor 470, and an impact absorbing member 450 of a wiper system 40 according to the fourth embodiment of the present invention will be described in turn.

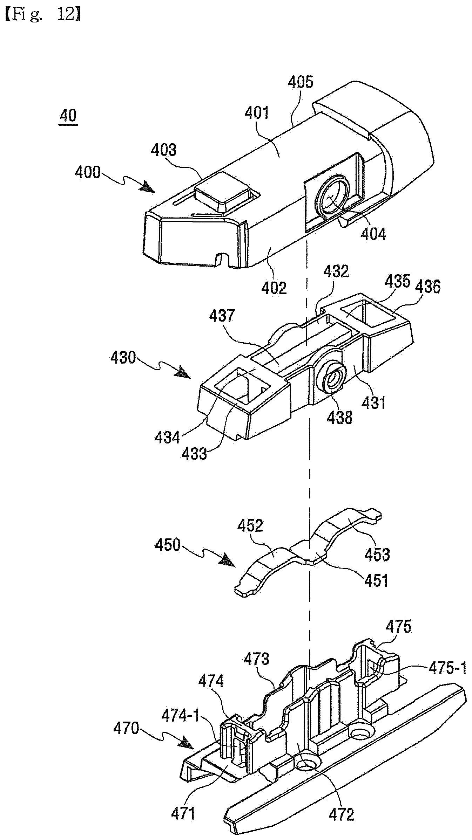

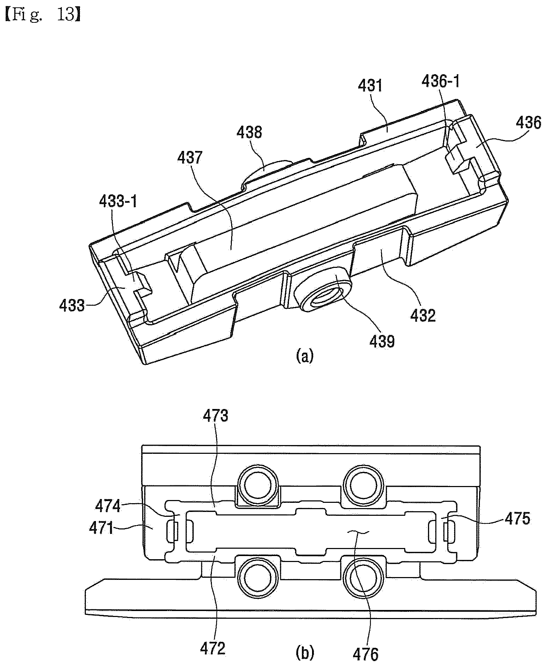

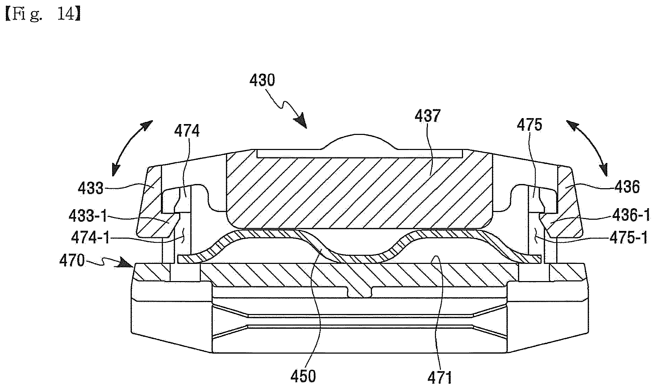

Fig. 12 is an exploded perspective view of the wiper system according to the fourth embodiment of the present invention. Fig. 13 shows the upper adaptor and the base adaptor shown in Fig. 12. Fig. 14 is a cross sectional view of a cut away portion when the upper adaptor, the impact absorbing member, and the base adaptor shown in Fig. 12 have been coupled. A perspective view of the upper adaptor 430 viewed from below is shown in (a) of Fig. 13. A plan view of the base adaptor 470 is shown in (b) of Fig. 13. Related descriptions will be provided with reference to Figs. 12 to 14.

The connector 400 of the wiper system 40 according to the fourth embodiment of the present invention is the same as the connector 100 of the wiper system 10 according to the first embodiment, the detailed descriptions of the same parts of as those of the first embodiment will be omitted.

The connector 400 may be connected to the below-described upper adaptor 430. Specifically, holes 404 and 405 may be formed in a first connector sidewall 402 and a second connector sidewall 403 of the connector 400, respectively. A first protrusion 438 and a second protrusion 439 of the upper adaptor 430 are inserted into the holes 404 and 405 respectively, so that the connector 400 and the upper adaptor 430 can be fastened to each other. Therefore, the connector 400 and the upper adaptor 430 can be rotated with respect to each other about the first protrusion 438 and the second protrusion 439.

The upper adaptor 430 of the wiper system 40 according to the fourth embodiment of the present invention may include a first upper adaptor sidewall 431 and a second upper adaptor sidewall 432 which are formed in the longitudinal direction of the wiper blade 190. The first upper adaptor sidewall 431 and the second upper adaptor sidewall 432 are opposite to each other and are disposed apart from each other at a predetermined distance.

The first upper adaptor sidewall 431 and the second upper adaptor sidewall 432 may be formed as a flat surface and may be formed as a surface having a curvature or a step in accordance with the fourth embodiment of the present invention.

The first protrusion 438 may be formed on the outer surface of the middle portion of the first upper adaptor sidewall 431 in the longitudinal direction of the wiper blade 190.

The second protrusion 439 may be formed on the outer surface of the middle portion of the second upper adaptor sidewall 432 in the longitudinal direction of the wiper blade 190.

The first protrusion 438 and the second protrusion 439 may be respectively inserted into the holes 404 and 405, which are formed respectively in the first connector sidewall 402 and the second connector sidewall 403 of the connector 400. Therefore, the connector 400 and the upper adaptor 430 can be rotated with respect to each other about the first protrusion 438 and the second protrusion 439.

The upper adaptor 430 may include a first connection member 433, a second connection member 434, a third connection member 435, and a fourth connection member 436 which are between the first upper adaptor sidewall 431 and the second upper adaptor sidewall 432 and connect the first upper adaptor sidewall 431 and the second upper adaptor sidewall 432.

The first connection member 433, the second connection member 434, the third connection member 435, and the fourth connection member 436 may have a flat plate shape having a predetermined thickness.

The first connection member 433 and the fourth connection member 436 may be disposed on both end portions of the first upper adaptor sidewall 431 and the second upper adaptor sidewall 432.

The second connection member 434 may be disposed between the first connection member 433 and the middle portion of the upper adaptor 430 in the longitudinal direction of the wiper blade 190. The third connection member 435 may be disposed between the middle portion of the upper adaptor 430 and the fourth connection member 436 in the longitudinal direction of the wiper blade 190.

A first catching portion 433-1 may be formed on one side of the first connection member 433. The first catching portion 433-1 may have a shape protruding from the one side of the first connection member 433 toward the middle portion of the upper adaptor 430. The first catching portion 433-1 may be inserted into a first catching hole 474-1 of the below-described base adaptor 470.

A second catching portion 436-1 may be formed on one side of the fourth connection member 436. The second catching portion 436-1 may have a shape protruding from the one side of the fourth connection member 436 toward the middle portion of the upper adaptor 430. The second catching portion 436-1 may be inserted into a second catching hole 475-1 of the below-described base adaptor 470.

The first catching portion 433-1 and the second catching portion 436-1 of the upper adaptor 430 are inserted into the first catching hole 474-1 and the second catching hole 475-1 of the base adaptor 470 respectively, so that the upper adaptor 430 and the base adaptor 470 can be fastened to each other. However, even though the first catching portion 433-1 and the second catching portion 436-1 are fastened, the first catching portion 433-1 and the second catching portion 436-1 are able to move within the opening because the first catching hole 474-1 and the second catching hole 475-1 have an enough space. Therefore, the upper adaptor 430 and the base adaptor 470 can move relative to each other.

A fifth connection member 437 may be formed between the second connection member 434 and the third connection member 435. The fifth connection member 437 is formed in the longitudinal direction of the wiper blade 190 and connects the second connection member 434 and the third connection member 435. The fifth connection member 437 may have a flat plate shape having a predetermined thickness.

The below-described impact absorbing member 450 is disposed under the fifth connection member 437. The fifth connection member 437 and the impact absorbing member 450 may contact each other.

According to the fourth embodiment of the present invention, the fifth connection member 437 may not be formed and the second connection member 434 and the third connection member 435 may be extended to serve as the fifth connection member 437. In this case, the extended portion of the second connection member 434 and the extended portion of the third connection member 435 may be connected to each other or may be separated from each other. The extended portion of the second connection member 434 and the extended portion of the third connection member 435 may contact the impact absorbing member 450.

The base adaptor 470 of the wiper system 40 according to the fourth embodiment of the present invention may include a base adaptor base portion 471, a first base adaptor sidewall 472 and a second base adaptor sidewall 473 which are formed in the longitudinal direction of the wiper blade 190 and protrude toward the connector 400 from the base adaptor base portion 471. The first base adaptor sidewall 472 and the second base adaptor sidewall 473 are opposite to each other and are disposed apart from each other at a predetermined distance.

The base adaptor base portion 471 may be formed as a flat surface and may be formed as a surface having a curvature, a step, or a recess in accordance with the fourth embodiment of the present invention.

The first base adaptor sidewall 472 and the second base adaptor sidewall 473 may be formed in the longitudinal direction of the wiper blade 190 respectively and may be formed to protrude or extend toward the connector 300 from the base adaptor base portion 471.

The first base adaptor sidewall 472 and the second base adaptor sidewall 473 may be formed as a flat surface and may be formed as a surface having a curvature or a step in accordance with the fourth embodiment of the present invention.

The impact absorbing member 450 may be disposed between the first base adaptor sidewall 472 and the second base adaptor sidewall 473.

The base adaptor 470 may include a first sidewall connection member 474 and a second sidewall connection member 475 which are between the first base adaptor sidewall 472 and the second base adaptor sidewall 473 and connect both end portions of the first base adaptor sidewall 472 and the second base adaptor sidewall 473.

The first catching hole 474-1 that is an opening may be formed in the lower portion of the first sidewall connection member 474. The second catching hole 475-1 that is an opening may be formed in the lower portion of the second sidewall connection member 475.

The first catching portion 433-1 and the second catching portion 436-1 of the upper adaptor 430 are inserted into the first catching hole 474-1 and the second catching hole 475-1 respectively, so that the upper adaptor 430 and the base adaptor 470 can be fastened to each other.

Even though the first catching portion 433-1 and the second catching portion 436-1 are fastened, the first catching portion 433-1 and the second catching portion 436-1 are able to move within the opening because the first catching hole 474-1 and the second catching hole 475-1 have an enough space. Therefore, the upper adaptor 430 and the base adaptor 470 can move relative to each other.

The base adaptor 470 may be coupled to the wiper blade 190. Specifically, the base adaptor 470 may be disposed in the middle portion of the guide spring 193 and fastened to the guide spring 193.

The impact absorbing member 450 of the wiper system 40 according to the fourth embodiment of the present invention may have a predetermined length and two or more bent portions. For example, the impact absorbing member 450 may have a plate shape having a predetermined thickness or may have a round bar shape such as wire or rod. The impact absorbing member 450 have two or more bent portions. Specifically, when the impact absorbing member 450 have a plate shape having a predetermined thickness, the horizontal length of the impact absorbing member 450 is greater than the vertical length of the impact absorbing member 450, and the impact absorbing member 450 may have two or more bent portions.

The impact absorbing member 450 may include a first portion 451, a second portion 452, and a third portion 453 which are separated by the bent portion. The first portion 451 is disposed between the second portion 452 and the third portion 453. The second portion 452 and the third portion 453 have a shape convex toward the connector 400. The shapes of the second portion 452 and the third portion 453 may be formed symmetrically with each other.

The impact absorbing member 450 may be disposed between the first base adaptor sidewall 472 and the second base adaptor sidewall 473 of the base adaptor 470.

The first catching portion 433-1 and the second catching portion 436-1 of the upper adaptor 430 are inserted into the first catching hole 474-1 and the second catching hole 475-1 of the base adaptor 470 respectively, so that the upper adaptor 430 and the base adaptor 470 can be fastened to each other and can move relative to each other. Here, the second portion 452 and the third portion 453 of the impact absorbing member 450 may contact the fifth connection member 437 of the upper adaptor 430.

During the operation of the wiper, when the impact is transmitted to or generated in the wiper system or when the external force is applied to the wiper system, the upper adaptor 430 and the base adaptor 470 may move relative to each other. Here, when the impact absorbing member 450 is bent by the impact or external force, the impact absorbing member 450 is able to absorb or mitigate the impact by using elasticity.

### <Fifth Embodiment 50 >

Hereinafter, a connector 500, an upper adaptor 530, a base adaptor 570, and an impact absorbing member 550 of a wiper system 50 according to the fifth embodiment of the present invention will be described in turn.

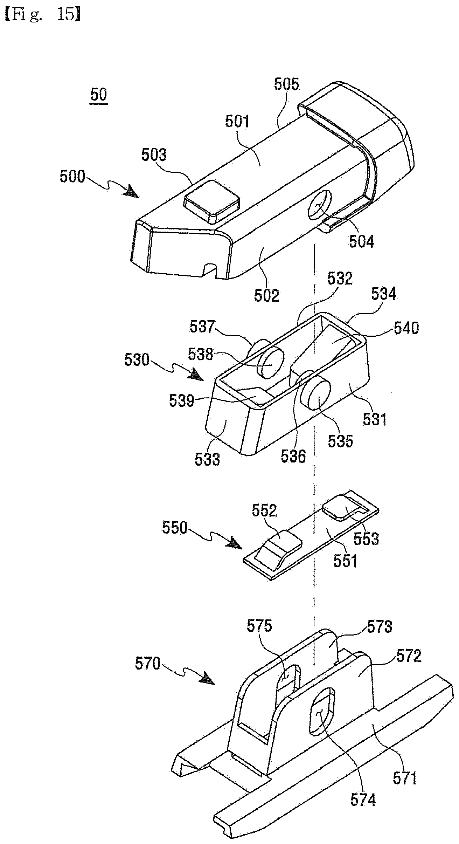

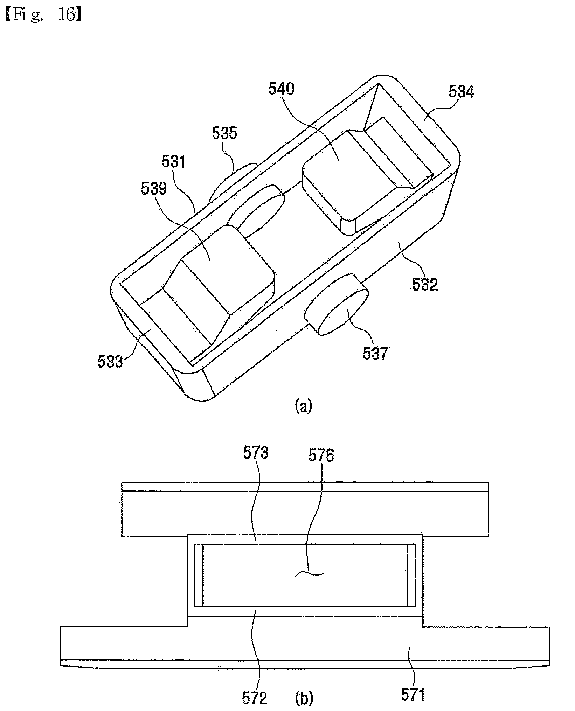

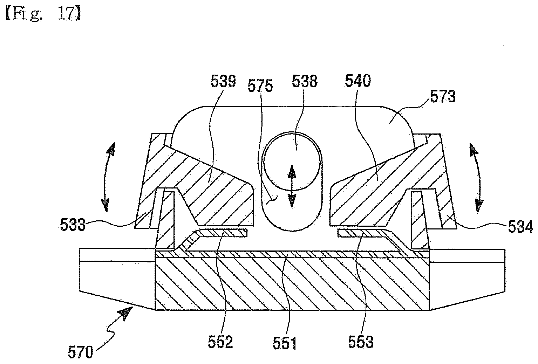

Fig. 15 is an exploded perspective view of the wiper system according to the fifth embodiment of the present invention. Fig. 16 shows the upper adaptor and the base adaptor shown in Fig. 15. Fig. 17 is a cross sectional view of a cut away portion when the upper adaptor, the impact absorbing member, and the base adaptor shown in Fig. 15 have been coupled. A perspective view of the upper adaptor 530 viewed from below is shown in (a) of Fig. 16. A plan view of the base adaptor 570 is shown in (b) of Fig. 16. Related descriptions will be provided with reference to Figs. 15 to 17.

The connector 500 of the wiper system 50 according to the fifth embodiment of the present invention is the same as the connector 100 of the wiper system 10 according to the first embodiment, the detailed descriptions of the same parts of as those of the first embodiment will be omitted.

The connector 500 may be connected to the below-described upper adaptor 530. Specifically, holes 504 and 505 may be formed in a first connector sidewall 502 and a second connector sidewall 503 of the connector 500, respectively. A first protrusion 535 and a third protrusion 537 of the upper adaptor 530 are inserted into the holes 504 and 505 respectively, so that the connector 500 and the upper adaptor 530 can be fastened to each other. Therefore, the connector 500 and the upper adaptor 530 can be rotated with respect to each other about the first protrusion 535 and the third protrusion 537.

The upper adaptor 530 of the wiper system 50 according to the fifth embodiment of the present invention may include a first upper adaptor sidewall 531 and a second upper adaptor sidewall 532 which are formed in the longitudinal direction of the wiper blade 190. The first upper adaptor sidewall 531 and the second upper adaptor sidewall 532 are opposite to each other and are disposed apart from each other at a predetermined distance.

The first upper adaptor sidewall 531 and the second upper adaptor sidewall 532 may be formed as a flat surface and may be formed as a surface having a curvature or a step in accordance with the fifth embodiment of the present invention.

The upper adaptor 530 may include a first connection member 533 and a second connection member 534 which are between the first upper adaptor sidewall 531 and the second upper adaptor sidewall 532 and connect the first upper adaptor sidewall 531 and the second upper adaptor sidewall 532.

The first connection member 533 and the second connection member 534 may have a flat plate shape having a predetermined thickness.

The first connection member 533 and the second connection member 534 may be disposed on both end portions of the first upper adaptor sidewall 531 and the second upper adaptor sidewall 532 and may connect the first upper adaptor sidewall 531 and the second upper adaptor sidewall 532.

The first connection member 533 may include a first sidewall protrusion 539 which protrudes from the inner surface of the first connection member 533 toward the opening. The second connection member 534 may include a second sidewall protrusion 540 which protrudes from the inner surface of the second connection member 534 toward the opening.

The shapes of the first sidewall protrusion 539 and the second sidewall protrusion 540 are not specially determined. The first sidewall protrusion 539 and the second sidewall protrusion 540 may have various shapes. The first sidewall protrusion 539 and the second sidewall protrusion 540 may be opposite to each other and may have the same shape.

The below-described impact absorbing member 550 may be disposed under the first sidewall protrusion 539 and the second sidewall protrusion 540. One side of the first sidewall protrusion 539 and one side of the second sidewall protrusion 540 may contact the impact absorbing member 550.

The first protrusion 535 and a second protrusion 536 may be formed on the outer surface and the inner surface of the middle portion of the first upper adaptor sidewall 531 in the longitudinal direction of the wiper blade 190 respectively.

The third protrusion 537 and a fourth protrusion 538 may be formed on the outer surface and the inner surface of the middle portion of the second upper adaptor sidewall 532 in the longitudinal direction of the wiper blade 190 respectively.

The first protrusion 535 and the third protrusion 537 may be respectively inserted into the holes 504 and 505, which are formed respectively in the first connector sidewall 502 and the second connector sidewall 503 of the connector 500. Therefore, the connector 500 and the upper adaptor 530 can be rotated with respect to each other about the first protrusion 535 and the third protrusion 537.

The second protrusion 536 and the fourth protrusion 538 may be respectively inserted into holes 574 and 575, which are formed in a first base adaptor sidewall 572 and a second base adaptor sidewall 573 of the below-described base adaptor 570 respectively. Therefore, the upper adaptor 530 and the base adaptor 570 can be rotated with respect to each other about the second protrusion 536 and the fourth protrusion 538.

The base adaptor 570 of the wiper system 50 according to the fifth embodiment of the present invention may include a base adaptor base portion 571, and the first base adaptor sidewall 572 and the second base adaptor sidewall 573 which are formed in the longitudinal direction of the wiper blade 190 and protrude toward the connector 500 from the base adaptor base portion 571. The first base adaptor sidewall 572 and the second base adaptor sidewall 573 are opposite to each other and are disposed apart from each other at a predetermined distance.

The base adaptor base portion 571 may be formed as a flat surface and may be formed as a surface having a curvature or a step in accordance with the fifth embodiment of the present invention.

The first base adaptor sidewall 572 and the second base adaptor sidewall 573 may be formed in the longitudinal direction of the wiper blade 190 respectively and may be formed to protrude or extend toward the connector 500 from the base adaptor base portion. The second base adaptor sidewall 573 is opposite to the first base adaptor sidewall 572.

The holes 574 and 575 may be formed in the middle portions of the first base adaptor sidewall 572 and the second base adaptor sidewall 573 respectively. The holes 574 and 575 may be opposite to each other. The second protrusion 536 and the fourth protrusion 538 of the upper adaptor 530 are inserted into the holes 574 and 575 respectively, so that the upper adaptor 530 and the base adaptor 570 can be fastened to each other. Also, the upper adaptor 530 and the base adaptor 570 can be rotated with respect to each other about the second protrusion 536 and the fourth protrusion 538.

The first base adaptor sidewall 572 is inserted into an opening formed between the inner surface of the first upper adaptor sidewall 531, one surface of the first sidewall protrusion 539, and one side surface of the second sidewall protrusion 540 of the upper adaptor 530. Thus, the second protrusion 536 of the upper adaptor 530 can be inserted and fastened to the hole 574 formed in the first base adaptor sidewall 572.

The second base adaptor sidewall 573 is inserted into an opening formed between the inner surface of the second upper adaptor sidewall 532, the other surface of the first sidewall protrusion 539, and the other side surface of the second sidewall protrusion 540 of the upper adaptor 530. Thus, the fourth protrusion 538 of the upper adaptor 530 can be inserted and fastened to the hole 575 formed in the second base adaptor sidewall 573.

The holes 574 and 575 formed in the middle portions of the first base adaptor sidewall 572 and the second base adaptor sidewall 573 respectively may be long up and down. Therefore, the upper adaptor 530 is able to move up and down along the long up and down holes 574 and 575. Specifically, the second protrusion 536 and the fourth protrusion 538 of the upper adaptor 530 inserted into the holes 574 and 575 is able to move up and down along the long up and down holes 574 and 575. Also, the transverse widths or longitudinal widths of the holes 574 and 575 may be the same as each other.

In summary, since the second protrusion 536 and the fourth protrusion 538 of the upper adaptor 530 are disposed in the holes 574 and 575 formed in the first base adaptor sidewall 572 and the second base adaptor sidewall 573 respectively, the upper adaptor 530 is able to rotate about the second protrusion 536 and the fourth protrusion and is also able to move up and down. When impact is transmitted to or generated in the wiper system, the upper adaptor 530 is able to absorb and mitigate the impact by rotating and moving up and down.

The base adaptor 570 may be coupled to the wiper blade 190. Specifically, the base adaptor 570 may be disposed in the middle portion of the guide spring 193 and fastened to the guide spring 193.

The impact absorbing member 550 of the wiper system 50 according to the fifth embodiment of the present invention may include a first member 551, a second member 552, and a third member 553.

The first member 551 may have a predetermined length in one direction. For example, the first member 551 may have a long plate shape having a predetermined thickness in one direction or may have a round bar shape such as wire or rod. Specifically, when the first member 551 has a long plate shape having a predetermined thickness in one direction, the horizontal length of the first member 551 may be greater than the vertical length of the first member 551.

The second member 552 may protrude from one side of the first member 551 toward the connector 500 and may include at least one bent portion.

The third member 553 may protrude from the other side of the first member 551 toward the connector 500 and may include at least one bent portion.

End portions of the second member 552 and the third member 553 may face each other. Specifically, end portions of the second member 552 and the third member 553 may face the middle portion of the first member 551 and may be opposite to each other. The shapes of the second member 552 and the third member 553 may be formed symmetrically with each other.

The first member 551, the second member 552, and the third member 553 of the impact absorbing member 550 may be formed integrally with each other or may be separately manufactured and coupled to each other.

The impact absorbing member 550 may be disposed on the base adaptor base portion 571 of the base adaptor 570 and between the first base adaptor sidewall 572 and the second base adaptor sidewall 573.

The second protrusion 536 and the fourth protrusion 538 of the upper adaptor 530 are respectively inserted into the holes 574 and 575, which are formed in the first base adaptor sidewall 572 and the second base adaptor sidewall 573 of the base adaptor 570 respectively. As a result, the upper adaptor 530 and the base adaptor 570 can be rotated with respect to each other about the second protrusion 536 and the fourth protrusion 538 and can also move up and down with respect to each other. Here, the second member 552 and the third member 553 of the impact absorbing member 550 may contact one side of the first sidewall protrusion 539 and one side of the second sidewall protrusion 540 of the upper adaptor 530 respectively.

During the operation of the wiper, when the impact is transmitted to or generated in the wiper system or when the external force is applied to the wiper system, the upper adaptor 530 and the base adaptor 570 may be rotated or move with respect to each other. Here, when the second member 552 and/or the third member 553 of the impact absorbing member 550 is bent by the impact or external force, the impact absorbing member 550 is able to absorb or mitigate the impact by using elasticity.

### <Sixth Embodiment 60>

Hereinafter, a connector 600, an upper adaptor 630, a base adaptor 670, and an impact absorbing member 650 of a wiper system 60 according to the sixth embodiment of the present invention will be described in turn.

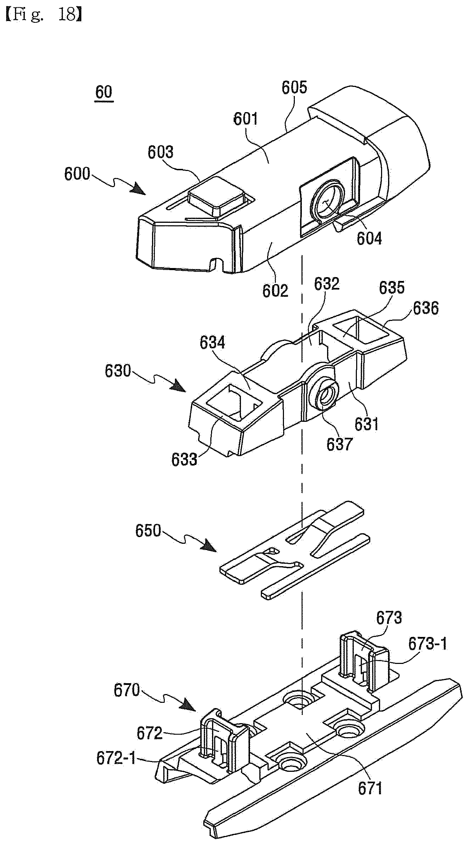

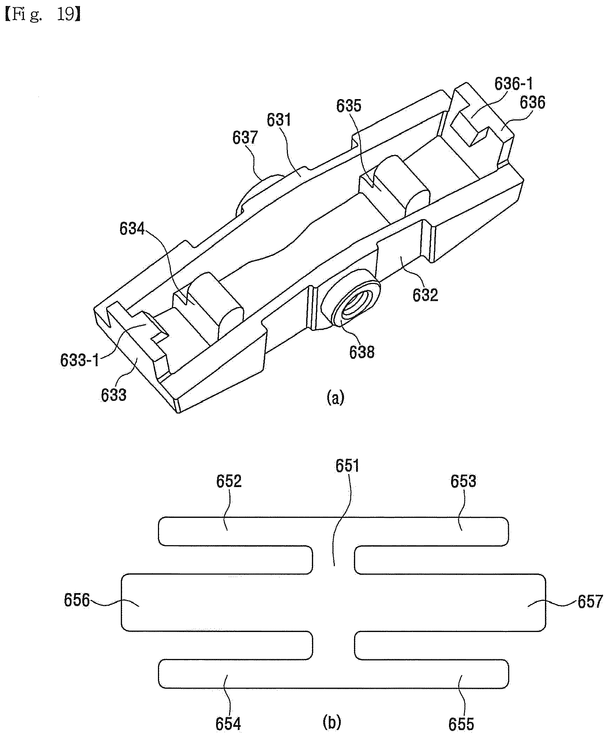

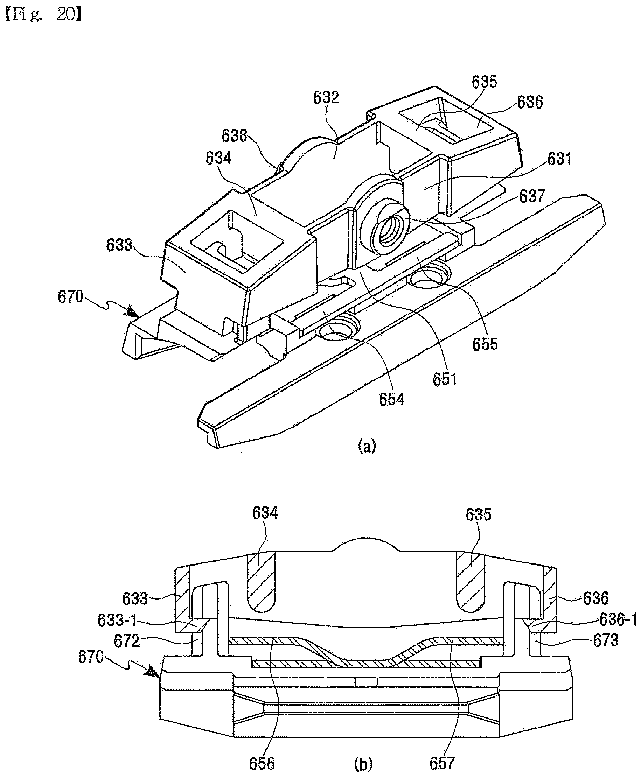

Fig. 18 is an exploded perspective view of the wiper system according to the sixth embodiment of the present invention. Fig. 19 shows the upper adaptor and the impact absorbing member shown in Fig. 18. Fig. 20 shows that the upper adaptor, the impact absorbing member, and the base adaptor shown in Fig. 18 have been coupled. A perspective view of the upper adaptor 630 viewed from below is shown in (a) of Fig. 19. A plan view of the impact absorbing member 650 is shown in (b) of Fig. 19. A perspective view when the upper adaptor 630, the impact absorbing member 650, and the base adaptor 670 have been coupled is shown in (a) of Fig. 20. A cross sectional view of a cut away portion of (a) of Fig. 20 is shown in (b) of Fig. 20. Related descriptions will be provided with reference to Figs. 18 to 20.

The connector 600 of the wiper system 60 according to the sixth embodiment of the present invention is the same as the connector 100 of the wiper system 10 according to the first embodiment, the detailed descriptions of the same parts of as those of the first embodiment will be omitted.

The connector 600 may be connected to the below-described upper adaptor 630. Specifically, holes 604 and 605 may be formed in a first connector sidewall 602 and a second connector sidewall 603 of the connector 600, respectively. A first protrusion 637 and a second protrusion 638 of the upper adaptor 630 are inserted into the holes 604 and 605 respectively, so that the connector 600 and the upper adaptor 630 can be fastened to each other. Therefore, the connector 600 and the upper adaptor 630 can be rotated with respect to each other about the first protrusion 637 and the second protrusion 638.

The upper adaptor 630 of the wiper system 60 according to the sixth embodiment of the present invention may include a first upper adaptor sidewall 631 and a second upper adaptor sidewall 632 which are formed in the longitudinal direction of the wiper blade 190. The first upper adaptor sidewall 631 and the second upper adaptor sidewall 632 are opposite to each other and are disposed apart from each other at a predetermined distance.

The first upper adaptor sidewall 631 and the second upper adaptor sidewall 632 may be formed as a flat surface and may be formed as a surface having a curvature or a step in accordance with the sixth embodiment of the present invention.

The first protrusion 637 may be formed on the outer surface of the middle portion of the first upper adaptor sidewall 631 in the longitudinal direction of the wiper blade 190.

The second protrusion 638 may be formed on the outer surface of the middle portion of the second upper adaptor sidewall 632 in the longitudinal direction of the wiper blade 190.

The first protrusion 637 and the second protrusion 638 may be respectively inserted into the holes 604 and 605, which are formed respectively in the first connector sidewall 602 and the second connector sidewall 603 of the connector 600. Therefore, the connector 600 and the upper adaptor 630 can be rotated with respect to each other about the first protrusion 637 and the second protrusion 638.

The upper adaptor 630 may include a first connection member 633, a second connection member 634, a third connection member 635, and a fourth connection member 636 which are between the first upper adaptor sidewall 631 and the second upper adaptor sidewall 632 and connect the first upper adaptor sidewall 631 and the second upper adaptor sidewall 632.

The first connection member 633, the second connection member 634, the third connection member 635, and the fourth connection member 636 may have a flat plate shape having a predetermined thickness.

The first connection member 633 and the fourth connection member 636 may be disposed on both end portions of the first upper adaptor sidewall 631 and the second upper adaptor sidewall 632.

The second connection member 634 may be disposed between the first connection member 633 and the middle portion of the upper adaptor 630 in the longitudinal direction of the wiper blade 190. The third connection member 635 may be disposed between the middle portion of the upper adaptor 630 and the fourth connection member 636 in the longitudinal direction of the wiper blade 190.

The below-described impact absorbing member 650 may be disposed under the second connection member 634 and the third connection member 635. The second connection member 634 and/or the third connection member 635 may contact the impact absorbing member 650.

A first catching portion 633-1 may be formed on one side of the first connection member 633. The first catching portion 633-1 may have a shape protruding from the one side of the first connection member 633 toward the middle portion of the upper adaptor 630. The first catching portion 633-1 may be inserted into a first catching hole 672-1 of the below-described base adaptor 670.

A second catching portion 636-1 may be formed on one side of the fourth connection member 636. The second catching portion 636-1 may have a shape protruding from the one side of the fourth connection member 636 toward the middle portion of the upper adaptor 630. The second catching portion 636-1 may be inserted into a second catching hole 673-1 of the below-described base adaptor 670.

The first catching portion 633-1 and the second catching portion 636-1 of the upper adaptor 630 are inserted into the first catching hole 672-1 and the second catching hole 673-1 of the base adaptor 670 respectively, so that the upper adaptor 630 and the base adaptor 670 can be fastened to each other. However, even though the first catching portion 633-1 and the second catching portion 636-1 are fastened, the first catching portion 633-1 and the second catching portion 636-1 are able to move within the opening because the first catching hole 672-1 and the second catching hole 673-1 have an enough space. Therefore, the upper adaptor 630 and the base adaptor 670 can move relative to each other.

The base adaptor 670 of the wiper system 60 according to the sixth embodiment of the present invention may include a base adaptor base portion 671, and a first base adaptor protrusion 672 and a second base adaptor protrusion 673 which protrude toward the connector 600 from the base adaptor base portion 671. The first base adaptor protrusion 672 and the second base adaptor protrusion 673 are opposite to each other and are disposed apart from each other at a predetermined distance.

The base adaptor base portion 671 may be formed as a flat surface and may be formed as a surface having a curvature, a step, or a recess in accordance with the sixth embodiment of the present invention.

The first base adaptor protrusion 672 and the second base adaptor protrusion 673 are sidewalls respectively formed in a direction perpendicular to the longitudinal direction of the wiper blade 190 and may be formed to protrude or extend toward the connector 600 from the base adaptor base portion 671

The first base adaptor protrusion 672 and the second base adaptor protrusion 673 may be formed as a flat surface and may be formed as a surface having a curvature or a step in accordance with the sixth embodiment of the present invention.

The first base adaptor protrusion 672 may be disposed between the first connection member 633 and the second connection member 634 of the upper adaptor 630. The second base adaptor protrusion 673 may be disposed between the third connection member 635 and the fourth connection member 636 of the upper adaptor 630.

The impact absorbing member 650 may be disposed between the first base adaptor protrusion 672 and the second base adaptor protrusion 673.

The first base adaptor protrusion 672 may include the first catching hole 672-1 that is an opening, and the second base adaptor protrusion 673 may include the second catching hole 673-1 that is an opening.

The first catching portion 633-1 and the second catching portion 636-1 are inserted into the first catching hole 672-1 and the second catching hole 673-1 respectively, so that the upper adaptor 630 and the base adaptor 670 can be fastened to each other.

Even though the first catching portion 633-1 and the second catching portion 636-1 are fastened, the first catching portion 633-1 and the second catching portion 636-1 are able to move within the opening because the first catching hole 672-1 and the second catching hole 673-1 have an enough space. Therefore, the upper adaptor 630 and the base adaptor 670 can move relative to each other.

The base adaptor 670 may be coupled to the wiper blade 190. Specifically, the base adaptor 670 may be disposed in the middle portion of the guide spring 193 and fastened to the guide spring 193.

The impact absorbing member 650 of the wiper system 60 according to the sixth embodiment of the present invention may have a predetermined length in one direction. For example, the impact absorbing member 650 may have a long plate shape 651 having a predetermined thickness in one direction or may have a round bar shape such as wire or rod. The impact absorbing member 650 may include a plurality of wing portions 652,653,654,655, 656, and 657 extending respectively from both side portions and the middle portion of the impact absorbing member 650 in both directions. The wing portions 656 and 657 extending respectively from the middle portion in both directions may be higher than the middle portion 651.

Specifically, when the impact absorbing member 650 has a long plate shape having a predetermined thickness in one direction, the impact absorbing member 650 may have the plate shape 651 such that the horizontal length of the impact absorbing member 650 may be less than the vertical length of the impact absorbing member 650.

The plurality of wing portions 652, 653, 654, 655, 656, and 657 extending or protruding in both directions of the impact absorbing member 650 may be formed respectively on both side portions and middle portion of the impact absorbing member 650 in the longitudinal direction of the wiper blade 190. The wing portions 656 and 657 extending from the middle portion in both directions among the plurality of wing portions 652, 653, 654, 655, 656, and 657 may be higher than the middle portion 651.

The wing portions 656 and 657 extending from the middle portion in both directions may include at least one bent portion respectively and may be formed symmetrically with each other. Also, the wing portions 656 and 657 extending from the middle portion in both directions may have a shape convex toward the connector 600 respectively.

The impact absorbing member 650 may be disposed on the base adaptor base portion 671 of the base adaptor 670 and between the first base adaptor protrusion 672 and the second base adaptor protrusion 673.

The first catching portion 633-1 and the second catching portion 636-1 of the upper adaptor 630 are inserted respectively into the first catching hole 672-1 and the second catching hole 673-1 which are formed in the first base adaptor protrusion 672 and the second base adaptor protrusion 673 of the base adaptor 670 respectively, so that the upper adaptor 630 and the base adaptor 670 can be fastened to each other and can move relative to each other. Here, the wing portions 656 and 657 extending from the middle portion of the impact absorbing member 650 in both directions may contact the second connection member 634 and/or third connection member 635 of the upper adaptor 630 respectively.

During the operation of the wiper, when the impact is transmitted to or generated in the wiper system or when the external force is applied to the wiper system, the upper adaptor 630 and the base adaptor 670 may move relative to each other. Here, the wing portions 656 and 657 extending from the middle portion in both directions is bent by the impact or external force, the wing portions 656 and 657 of the impact absorbing member 650 is able to absorb or mitigate the impact by using elasticity.

### <Seventh Embodiment 70>

Hereinafter, a connector 700, an upper adaptor 730, a base adaptor 770, and an impact absorbing member 750 of a wiper system 70 according to the seventh embodiment of the present invention will be described in turn.

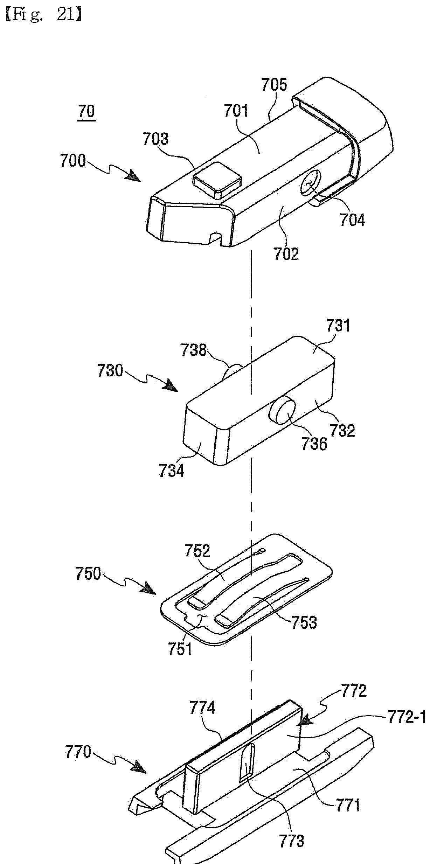

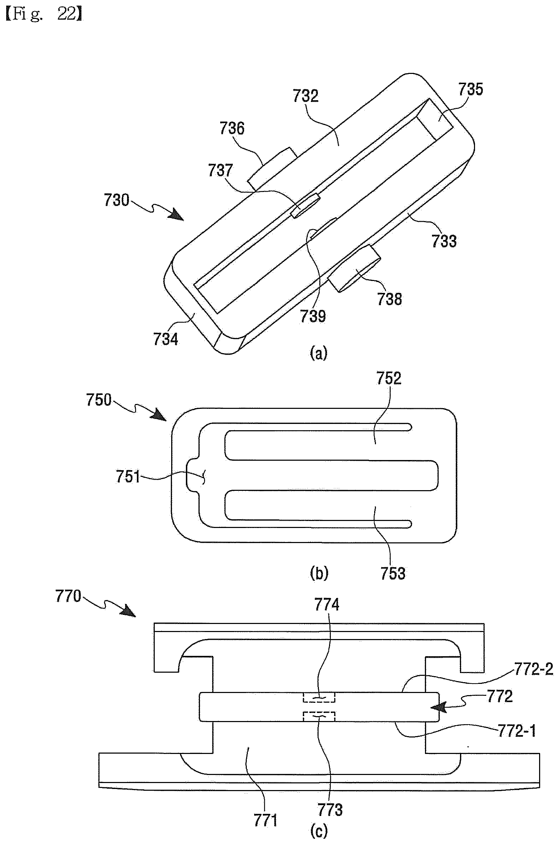

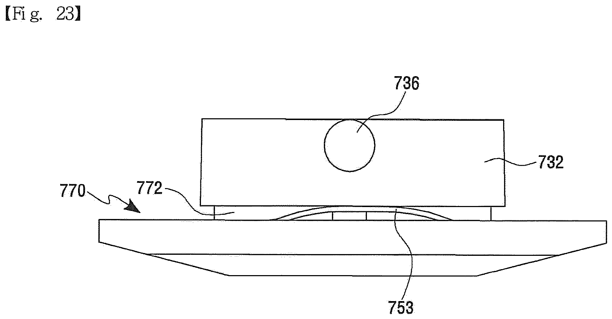

Fig. 21 is an exploded perspective view of the wiper system according to the seventh embodiment of the present invention. Fig. 22 shows the upper adaptor, the impact absorbing member, and the base adaptor shown in Fig. 21. Fig. 23 is a front view showing that the upper adaptor, the impact absorbing member, and the base adaptor shown in Fig. 21 have been coupled. A perspective view of the upper adaptor 730 viewed from below is shown in (a) of Fig. 22. A plan view of the impact absorbing member 750 is shown in (b) of Fig. 22. A plan view of the base adaptor 770 is shown in (c) of Fig. 22. Related descriptions will be provided with reference to Figs. 21 to 23.

The connector 700 of the wiper system 70 according to the seventh embodiment of the present invention is the same as the connector 100 of the wiper system 10 according to the first embodiment, the detailed descriptions of the same parts of as those of the first embodiment will be omitted.

The connector 700 may be connected to the below-described upper adaptor 730. Specifically, holes 704 and 705 may be formed in a first connector sidewall 702 and a second connector sidewall 703 of the connector 700, respectively. A first protrusion 736 and a third protrusion 738 of the upper adaptor 730 are inserted into the holes 704 and 705 respectively, so that the connector 700 and the upper adaptor 730 can be fastened to each other. Therefore, the connector 700 and the upper adaptor 730 can be rotated with respect to each other about the first protrusion 736 and the third protrusion 738.

The upper adaptor 730 of the wiper system 70 according to the seventh embodiment of the present invention may include an upper adaptor base portion 731, a first upper adaptor sidewall 732, and a second upper adaptor sidewall 733.

The upper adaptor base portion 731 may be formed as a flat surface and may be formed as a surface having a curvature or a step in accordance with the seventh embodiment of the present invention.

The first upper adaptor sidewall 732 and the second upper adaptor sidewall 733 are formed in the longitudinal direction of the wiper blade 190 respectively. The first upper adaptor sidewall 732 and the second upper adaptor sidewall 733 may be formed to protrude or extend downward from the side end of the upper adaptor base portion 731. The second upper adaptor sidewall 733 is opposite to the first upper adaptor sidewall 732.

The first upper adaptor sidewall 732 and the second upper adaptor sidewall 733 may be formed as a flat surface and may be formed as a surface having a curvature or a step in accordance with the seventh embodiment of the present invention.

The upper adaptor 730 of the wiper system 70 according to the seventh embodiment of the present invention may not have the upper adaptor base portion 731. For example, the upper adaptor 730 may include the first upper adaptor sidewall 732 and the second upper adaptor sidewall 733 which are formed in the longitudinal direction of the wiper blade 190 without the upper adaptor base portion 731. The first upper adaptor sidewall 732 and the second upper adaptor sidewall 733 may be opposite to each other and are disposed apart from each other at a predetermined distance. Also, the upper adaptor 730 may include a first connection member 734 and a second connection member 735 which are between the first upper adaptor sidewall 732 and the second upper adaptor sidewall 733 and connect the first upper adaptor sidewall 732 and the second upper adaptor sidewall 733. The first connection member 734 and the second connection member 735 may have a flat plate shape having a predetermined thickness. The first connection member 734 and the second connection member 735 may be disposed on both end portions of the first upper adaptor sidewall 732 and the second upper adaptor sidewall 733 and may connect the first upper adaptor sidewall 732 and the second upper adaptor sidewall 733.

The first protrusion 736 and a second protrusion 737 may be formed on the outer surface and the inner surface of the middle portion of the first upper adaptor sidewall 732 in the longitudinal direction of the wiper blade 190 respectively.

The second protrusion 738 and a fourth protrusion 739 may be formed on the outer surface and the inner surface of the middle portion of the second upper adaptor sidewall 733 in the longitudinal direction of the wiper blade 190 respectively.

The first protrusion 736 and the second protrusion 738 may be respectively inserted into the holes 704 and 705, which are formed respectively in the first connector sidewall 702 and the second connector sidewall 703 of the connector 700. Therefore, the connector 700 and the upper adaptor 730 can be rotated with respect to each other about the first protrusion 736 and the third protrusion 738.

The second protrusion 737 and the fourth protrusion 739 may be respectively inserted into a first side recess 773 and a second side recess 774 which are formed in a base adaptor protrusion 772 of the below-described base adaptor 770 respectively. Therefore, the upper adaptor 730 and the base adaptor 770 can be rotated with respect to each other about the second protrusion 737 and the fourth protrusion 739.

The base adaptor 770 of the wiper system 70 according to the seventh embodiment of the present invention may include a base adaptor base portion 771 and the base adaptor protrusion 772 which protrudes toward the connector 700 from the base adaptor base portion 771.

The base adaptor base portion 771 may be formed as a flat surface and may be formed as a surface having a curvature or a step in accordance with the seventh embodiment of the present invention.

The base adaptor protrusion 772 may include a first side surface 772-1 and a second side surface 772-2. Each of the first side surface 772-1 and the second side surface 772-2 is one side surface forming the base adaptor protrusion 772 in the longitudinal direction of the wiper blade 190. The first side surface 772-1 and the second side surface 772-2 are opposite to each other.

The first side surface 772-1 may include the first side recess 773 formed in the middle portion of the first side surface 772-1 in the longitudinal direction of the wiper blade 190. The second side surface 772-2 may include the second side recess 774 formed in the middle portion of the second side surface 772-2 in the longitudinal direction of the wiper blade 190. The first side recess 773 and the second side recess 774 are formed opposite to each other.

The second protrusion 737 of the upper adaptor 730 is inserted into the first side recess 773, and the fourth protrusion 739 of the upper adaptor 730 is inserted into the second side recess 774. As a result, the upper adaptor 730 and the base adaptor 770 can be fastened to each other and can be rotated with respect to each other about the second protrusion 737 and the fourth protrusion 739.

The first side recess 773 and the second side recess 774 may be long up and down. Therefore, the upper adaptor 730 is able to move up and down along the long up and down first side recess 773 and second side recess 774. Specifically, the second protrusion 737 and the fourth protrusion 739 of the upper adaptor 730 inserted into the first side recess 773 and the second side recess 774 respectively is able to move up and down along the long up and down recesses 773 and 774. Also, the transverse widths or longitudinal widths of the first side recess 773 and the second side recess 774 may be the same as each other.

The base adaptor 770 may be coupled to the wiper blade 190. Specifically, the base adaptor 770 may be disposed in the middle portion of the guide spring 193 and fastened to the guide spring 193.

The impact absorbing member 750 of the wiper system 70 according to the seventh embodiment of the present invention may have an opening 751 and may have a long plate shape having a predetermined thickness in one direction.

Also, the impact absorbing member 750 may include a first extension part 752 and a second extension part 753 which extend respectively from at least one of a plurality of surfaces forming the opening 751 toward the opening 751.

The first extension part 752 and the second extension part 753 are parallel with each other. The middle portion of the first extension part 752 and the middle portion of the second extension part 753 may have a curved shape protruding toward the connector 700, respectively. Also, the first extension part 752 and the second extension part 753 may have the same shape.

The base adaptor protrusion 772 of the base adaptor 770 may be disposed between the first extension part 752 and the second extension part 753 of the impact absorbing member 750.

The second protrusion 737 and the fourth protrusion 739 of the upper adaptor 730 are respectively inserted into the first side recess 773 and the second side recess 774 which are formed in the base adaptor protrusion 772 of the base adaptor 770. As a result, the upper adaptor 730 and the base adaptor 770 can be rotated with respect to each other about the second protrusion 737 and the fourth protrusion 739 and can also move up and down with respect to each other. Here, the first extension part 752 and the second extension part 753 of the impact absorbing member 750 may contact the bottom surface of the first upper adaptor sidewall 732 of the upper adaptor 730 and the bottom surface of the second upper adaptor sidewall 733 of the upper adaptor 730 respectively. Specifically, the middle portion (the portion curved to protrude toward the connector 700) of the first extension part 752 of the impact absorbing member 750 and the middle portion (the portion curved to protrude toward the connector 700) of the second extension part 753 of the impact absorbing member 750 may contact the bottom surface of the first upper adaptor sidewall 732 of the upper adaptor 730 and the bottom surface of the second upper adaptor sidewall 733 of the upper adaptor 730 respectively.

During the operation of the wiper, when the impact is transmitted to or generated in the wiper system or when the external force is applied to the wiper system, the upper adaptor 730 and the base adaptor 770 may be rotated or move with respect to each other. Here, when the first extension part 752 and/or the second extension part 753 of the impact absorbing member 750 is bent by the impact or external force, the impact absorbing member 750 is able to absorb or mitigate the impact by using elasticity.

### <Eighth Embodiment 80>

Hereinafter, a connector 800, an upper adaptor 830, a base adaptor 870, and an impact absorbing member 850 of a wiper system 80 according to the eighth embodiment of the present invention will be described in turn.

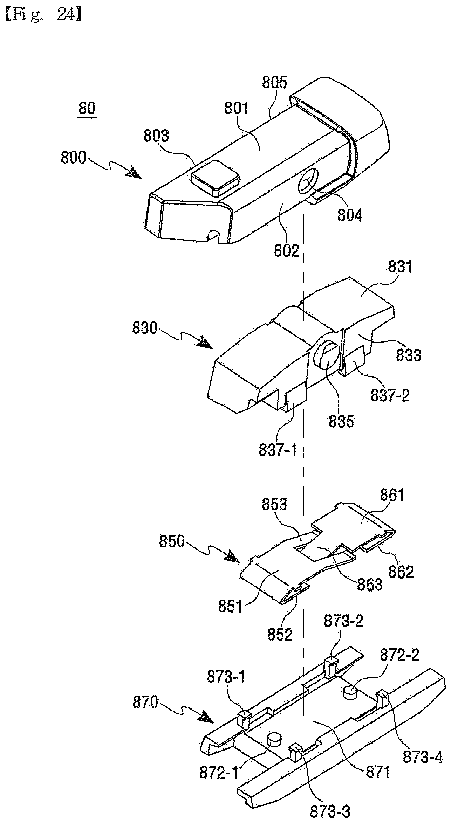

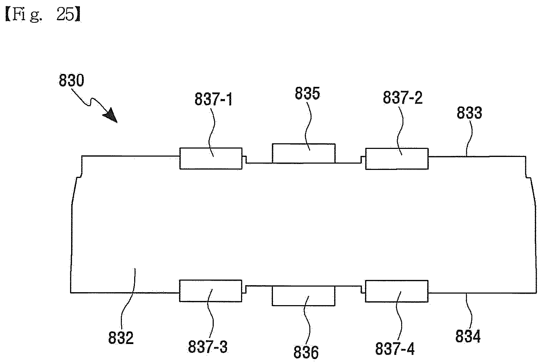

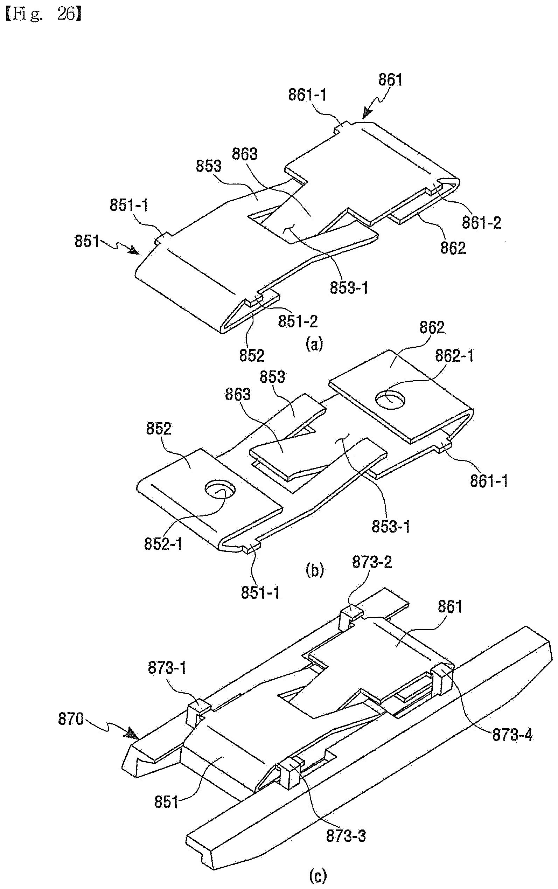

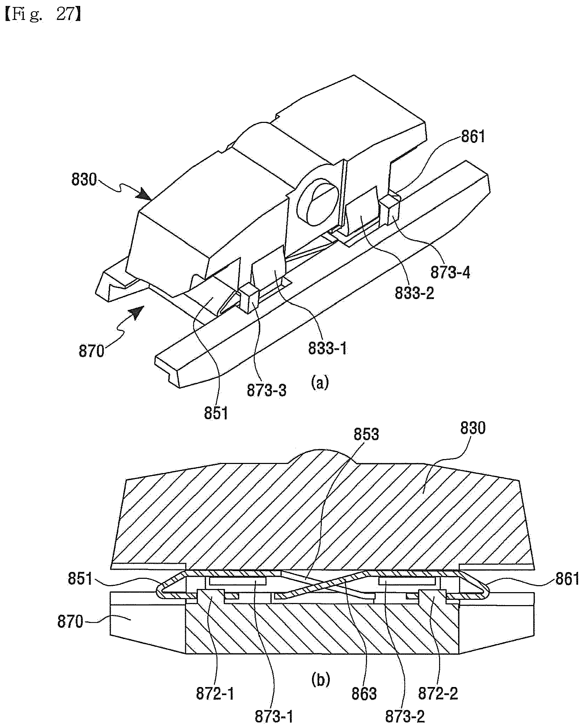

Fig. 24 is an exploded perspective view of the wiper system according to the eighth embodiment of the present invention. Fig. 25 is a bottom view of the upper adaptor shown in Fig. 24. Fig. 26 is a perspective view showing the impact absorbing member and the base adaptor shown in Fig. 24. Fig. 27 shows that the upper adaptor, the impact absorbing member, and the base adaptor shown in Fig. 24 have been coupled. A perspective view of the impact absorbing member 850 viewed from above is shown in (a) of Fig. 26. A perspective view of the impact absorbing member 850 viewed from below is shown in (b) of Fig. 26. A perspective view when the impact absorbing member 850 and the base adaptor 870 have been coupled is shown in (c) of Fig. 26. A perspective view when the upper adaptor 830, the impact absorbing member 850, and the base adaptor 870 have been coupled is shown in (a) of Fig. 27. A cross sectional view of a cut away portion of (a) of Fig. 27 is shown in (b) of Fig. 27. Related descriptions will be provided with reference to Figs. 24 and 27.

The connector 800 of the wiper system 80 according to the eighth embodiment of the present invention is the same as the connector 100 of the wiper system 10 according to the first embodiment, the detailed descriptions of the same parts of as those of the first embodiment will be omitted.

The connector 800 may be connected to the below-described upper adaptor 830. Specifically, holes 804 and 805 may be formed in a first connector sidewall 802 and a second connector sidewall 803 of the connector 800, respectively. A first protrusion 835 and a second protrusion 836 of the upper adaptor 830 are inserted into the holes 804 and 805 respectively, so that the connector 800 and the upper adaptor 830 can be fastened to each other. Therefore, the connector 800 and the upper adaptor 830 can be rotated with respect to each other about the first protrusion 835 and the second protrusion 836.

The upper adaptor 830 of the wiper system 80 according to the eighth embodiment of the present invention may include a top surface 831, a bottom surface 832, and a plurality of upper adaptor sidewalls connecting the top surface 831 and the bottom surface 832.

The top surface 831 of the upper adaptor 830 forms the top surface of the upper adaptor 830. The top surface 831 of the upper adaptor 830 may be formed as a flat surface and may be formed as a surface having a curvature or a step in accordance with the eighth embodiment of the present invention.

The bottom surface 832 of the upper adaptor 830 forms the bottom surface of the upper adaptor 830. The bottom surface 832 of the upper adaptor 830 may be formed as a flat surface and may be formed as a surface having a curvature or a step in accordance with the eighth embodiment of the present invention.

The plurality of upper adaptor sidewalls may include a first upper adaptor sidewall 833 and a second upper adaptor sidewall 834. The first upper adaptor sidewall 833 and the second upper adaptor sidewall 834 connect the top surface 831 and the bottom surface 832 and are formed in the longitudinal direction of the wiper blade 190. The first upper adaptor sidewall 833 and the second upper adaptor sidewall 834 are opposite to each other.

The first upper adaptor sidewall 833 and the second upper adaptor sidewall 834 may be formed as a flat surface and may be formed as a surface having a curvature or a step in accordance with the eighth embodiment of the present invention.

The first protrusion 835 may be formed to protrude from the middle portion of the outer surface of the first upper adaptor sidewall 833 in the longitudinal direction of the wiper blade 190.

The second protrusion 836 may be formed to protrude from the middle portion of the outer surface of the second upper adaptor sidewall 834 in the longitudinal direction of the wiper blade 190.

The first protrusion 835 and the second protrusion 836 may be respectively inserted into the holes 804 and 805, which are formed respectively in the first connector sidewall 802 and the second connector sidewall 803 of the connector 800. Therefore, the connector 800 and the upper adaptor 830 can be rotated with respect to each other about the first protrusion 835 and the second protrusion 836.

A first catching portion 837-1 and a second catching portion 837-2 may be formed on the lower portion of the first upper adaptor sidewall 833.

The first catching portion 837-1 and the second catching portion 837-2 may protrude or extend downward from the lower portion of the first upper adaptor sidewall 833 respectively. An end of the first catching portion 837-1 and an end of the second catching portion 837-2 may be formed to be fastened to the below-described impact absorbing member 850.

A third catching portion 837-3 and a fourth catching portion 837-4 may be formed on the lower portion of the second upper adaptor sidewall 834.

The third catching portion 837-3 and the fourth catching portion 837-4 may protrude or extend downward from the lower portion of the second upper adaptor sidewall 834 respectively. An end of the third catching portion 837-3 and an end of the fourth catching portion 837-4 may be formed to be fastened to the below-described impact absorbing member 850.

The first catching portion 837-1, the second catching portion 837-2, the third catching portion 837-3, and the fourth catching portion 837-4 may have the same shape.

The base adaptor 870 of the wiper system 80 according to the eighth embodiment of the present invention may include a base adaptor base portion 871 and a plurality of base adaptor catching portions 873 which protrude toward the connector 800 from the base adaptor base portion 871.

The base adaptor base portion 871 may be formed as a flat surface and may be formed as a surface having a curvature or a step in accordance with the eighth embodiment of the present invention.

Each of the plurality of base adaptor catching portions 873 may be formed to protrude or extend from the base adaptor base portion 871 toward the connector 800. An end of each of the plurality of base adaptor catching portions 873 may be formed to be fastened to the impact absorbing member 850. Specifically, the end of each of the plurality of base adaptor catching portions 873 may be formed to be fastened to a catch of the impact absorbing member 850. Therefore, the plurality of base adaptor catching portions 873 may be respectively placed in a position where the catches 851-1, 851-2, 861-1, and 861-2 of the impact absorbing member 850 are disposed (formed).

The plurality of base adaptor catching portions 873 may include a first base adaptor catching portion 873-1, a second base adaptor catching portion 873-2, a third base adaptor catching portion 873-3, a fourth base adaptor catching portion 873-4. The base adaptor catching portions 873 may have the same shape respectively.

In the base adaptor base portion 871, a first base adaptor protrusion 872-1 may be formed between the first base adaptor catching portion 873-1 and the third base adaptor catching portion 873-3. Also, a second base adaptor protrusion 872-2 may be formed between the second base adaptor catching portion 873-2 and the fourth base adaptor catching portion 873-4.

Each of the first base adaptor protrusion 872-1 and the second base adaptor protrusion 872-2 may be formed to protrude or extend from the base adaptor base portion 871 toward the connector 800.

The first base adaptor protrusion 872-1 may be inserted into a first hole 852-1 of the impact absorbing member 850, and the second base adaptor protrusion 872-2 may be inserted into a second hole 862-1 of the impact absorbing member 850. Therefore, the respective base adaptor protrusions 872 may be placed in a position where the holes 852-1 and 862-1 of the impact absorbing member 850 are disposed (formed).

The first base adaptor protrusion 872-1 and the second base adaptor protrusion 872-2 are inserted into the first hole 852-1 and the second hole 862-1 of the impact absorbing member 850, and thus, the impact absorbing member 850 can be fixed.

The base adaptor 870 may be coupled to the wiper blade 190. Specifically, the base adaptor 870 may be disposed in the middle portion of the guide spring 193 and fastened to the guide spring 193.

The impact absorbing member 850 of the wiper system 80 according to the eighth embodiment of the present invention may include a first member 851 and a second member 861.

Each of the first member 851 and the second member 861 may have a plate shape having a predetermined thickness and may include three or more bent portions.

An end portion 853 of the first member 851 may be bent toward the other end portion 852 of the first member 851, and an end portion 863 of the second member 861 may be bent toward the other end portion 862 of the second member 861.

A recess 853-1 may be formed in the middle portion of the end portion 853 of the first member 851. The end portion of the second member 861 may be disposed in the recess 853-1.

Between the end portion 853 and the other end portion 852 of the first member 851, a first catch 851-1 and a second catch 851-2 may be formed on both sides of the first member 851 in a direction perpendicular to the longitudinal direction of the wiper blade 190. The first catch 851-1 and the second catch 851-2 may be formed to protrude outward from the first member 851 respectively.

The first base adaptor catching portion 873-1 of the base adaptor 870 is fastened to the first catch 851-1, the third base adaptor catching portion 873-3 of the base adaptor 870 is fastened to the second catch 851-2.

Between the end portion 863 and the other end portion 862 of the second member 861, a third catch 861-1 and a fourth catch 861-2 may be formed on both sides of the second member 861 in a direction perpendicular to the longitudinal direction of the wiper blade 190. The third catch 861-1 and the fourth catch 861-2 may be formed to protrude outward from the second member 861 respectively.

The second base adaptor catching portion 873-2 of the base adaptor 870 is fastened to the third catch 861-1, the fourth base adaptor catching portion 873-4 of the base adaptor 870 is fastened to the fourth catch 861-2.

The hole 852-1 may be formed in the middle portion of the other end portion 852 of the first member 851. The hole is referred to as the first hole 852-1.

The hole 862-1 may be formed in the middle portion of the other end portion 862 of the second member 861. The hole is referred to as the second hole 862-1.

The first base adaptor protrusion 872-1 of the base adaptor 870 may be inserted into the first hole 852-1 of the first member 851, and the second base adaptor protrusion 872-2 of the base adaptor 870 may be inserted into the second hole 862-1 of the second member 861. Therefore, the shape of each of the first hole 852-1 and the second hole 862-1 as viewed from above may be in correspondence with the shape of the base adaptor protrusion 872.

The first base adaptor protrusion 872-1 and the second base adaptor protrusion 872-2 are inserted into the first hole 852-1 of the first member 851 and the second hole 862-1 of the second member 861 respectively, so that the first member 851 and the second member 861 can be fixed respectively.

The fastening relationship between the upper adaptor 830, the impact absorbing member 850, and the base adaptor 870 will be summarized as follows.

The first catching portion 837-1 and the third catching portion 837-3 of the upper adaptor 830 are fastened respectively to both sides of the first member 851 positioned between the end portion 853 and the other end portion 852 of the first member 851 of the impact absorbing member 850 in a direction perpendicular to the longitudinal direction of the wiper blade 190. Also, the second catching portion 837-2 and the fourth catching portion 837-4 of the upper adaptor 830 are fastened respectively to both sides of the second member 861 positioned between the end portion 863 and the other end portion 862 of the second member 861 of the impact absorbing member 850 in a direction perpendicular to the longitudinal direction of the wiper blade 190.

The first base adaptor catching portion 873-1 and the third base adaptor catching portion 873-3 of the base adaptor 870 are fastened respectively to the first catch 851-1 and the second catch 851-2 of the first member 851 of the impact absorbing member 850. Also, the second base adaptor catching portion 873-2 and the fourth base adaptor catching portion 873-4 of the base adaptor 870 are fastened respectively to the third catch 861-1 and the fourth catch 861-2 of the second member 861 of the impact absorbing member 850.

The first base adaptor protrusion 872-1 of the base adaptor 870 is inserted into the first hole 852-1 of the first member 851 of the impact absorbing member 850, and the second base adaptor protrusion 872-2 of the base adaptor 870 is inserted into the second hole 862-1 of the second member 861.

Therefore, the bottom surface of the upper adaptor 830 may contact the first member 851 and the second member 861 which are the impact absorbing member 850.

During the operation of the wiper, when the impact is transmitted to or generated in the wiper system or when the external force is applied to the wiper system, the impact or external force may be transmitted to the upper adaptor 830 and the base adaptor 870. Here, when the first member 851 and/or the second member 861 which are the impact absorbing member 850 is bent by the impact or external force, the first member 851 and/or the second member 861 can absorb or mitigate the impact by using elasticity.

### <Ninth Embodiment 90>

Hereinafter, a connector 900, an upper adaptor 930, a base adaptor 970, and an impact absorbing member 950 of a wiper system 90 according to the ninth embodiment of the present invention will be described in turn.

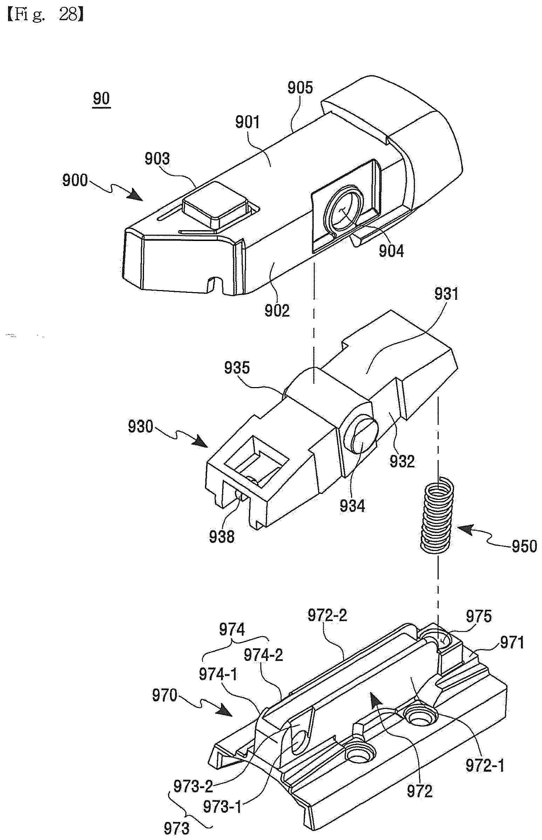

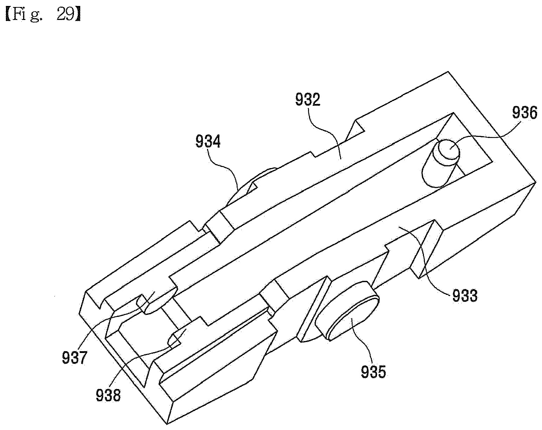

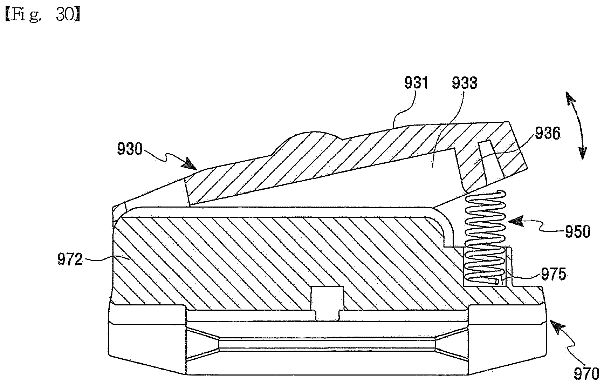

Fig. 28 is an exploded perspective view of the wiper system according to the ninth embodiment of the present invention. Fig. 29 is a bottom perspective view of the upper adaptor shown in Fig. 28. Fig. 30 is a cross sectional view of a cut away portion when the upper adaptor, the impact absorbing member, and the base adaptor shown in Fig. 28 have been coupled. Related descriptions will be provided with reference to Figs. 28 and 30.

The connector 900 of the wiper system 90 according to the ninth embodiment of the present invention is the same as the connector 100 of the wiper system 10 according to the first embodiment, the detailed descriptions of the same parts of as those of the first embodiment will be omitted.

The connector 900 may be connected to the below-described upper adaptor 930. Specifically, holes 904 and 905 may be formed in a first connector sidewall 902 and a second connector sidewall 903 of the connector 900, respectively. A first protrusion 934 and a second protrusion 935 of the upper adaptor 930 are inserted into the holes 904 and 905 respectively, so that the connector 900 and the upper adaptor 930 can be fastened to each other. Therefore, the connector 900 and the upper adaptor 930 can be rotated with respect to each other about the first protrusion 934 and the second protrusion 935.

The upper adaptor 930 of the wiper system 90 according to the ninth embodiment of the present invention may include an upper adaptor base portion 931, a first upper adaptor sidewall 932, and a second upper adaptor sidewall 933.

The upper adaptor base portion 931 may be formed as a flat surface and may be formed as a surface having a curvature or a step in accordance with the ninth embodiment of the present invention.

The first upper adaptor sidewall 932 and the second upper adaptor sidewall 933 are formed in the longitudinal direction of the wiper blade 190 respectively. The first upper adaptor sidewall 932 and the second upper adaptor sidewall 933 may be formed to protrude or extend downward from the side end of the upper adaptor base portion 931. The second upper adaptor sidewall 933 is opposite to the first upper adaptor sidewall 932.

The first upper adaptor sidewall 932 and the second upper adaptor sidewall 933 may be formed as a flat surface and may be formed as a surface having a curvature or a step in accordance with the ninth embodiment of the present invention.

The first protrusion 934 may be formed to protrude from the middle portion of the outer surface of the first upper adaptor sidewall 932 in the longitudinal direction of the wiper blade 190. Also, the second protrusion 935 may be formed to protrude from the middle portion of the outer surface of the second upper adaptor sidewall 933 in the longitudinal direction of the wiper blade 190.

The first protrusion 934 and the second protrusion 935 may be respectively inserted into the holes 904 and 905, which are formed respectively in the first connector sidewall 902 and the second connector sidewall 903 of the connector 900. Therefore, the connector 900 and the upper adaptor 930 can be rotated with respect to each other about the first protrusion 934 and the second protrusion 935.

A third protrusion 937 may be formed to protrude from one side of the inner surface of the first upper adaptor sidewall 932 in the longitudinal direction of the wiper blade 190. Also, a fourth protrusion 938 may be formed to protrude from one side of the inner surface of the second upper adaptor sidewall 933 in the longitudinal direction of the wiper blade 190. The third protrusion 937 and the fourth protrusion 938 may be formed to be opposite to each other.

The third protrusion 937 and the fourth protrusion 938 may be respectively inserted into a first side recess 973 and a second side recess 974 which are formed in a base adaptor protrusion 972 of the below-described base adaptor 970. Therefore, the upper adaptor 930 and the base adaptor 970 can be rotated with respect to each other about the third protrusion 937 and the fourth protrusion 938.

A fixing portion 936 which protrudes downward from the bottom surface of the upper adaptor base portion 931 may be formed on the bottom surface of the upper adaptor base portion 931. The fixing portion 936 may be formed on one side of the bottom surface of the upper adaptor base portion 931, which is a position opposite to the position where the third protrusion 937 and the fourth protrusion 938 are formed.

The below-described impact absorbing member 950 may be inserted into the fixing portion 936.

While Fig. 29 shows that the fixing portion 936 has a protruding shape, the fixing portion 936 may have a recess shape according to the ninth embodiment of the present invention. Any shape capable of allowing the impact absorbing member 950 to be inserted, such as a protruding shape, a recess shape, can be applied.

The base adaptor 970 of the wiper system 90 according to the ninth embodiment of the present invention may include a base adaptor base portion 971, a base adaptor protrusion 972 which protrudes from the base adaptor base portion 971 toward the connector 900, and a fixing recess 975 which is formed on one side of the base adaptor base portion 971.

The base adaptor base portion 971 may be formed as a flat surface and may be formed as a surface having a curvature, a step, or a recess in accordance with the ninth embodiment of the present invention.

The base adaptor protrusion 972 may include a first side surface 972-1 and a second side surface 972-2. Each of the first side surface 972-1 and the second side surface 972-2 is one side surface forming the base adaptor protrusion 972 in the longitudinal direction of the wiper blade 190. The first side surface 972-1 and the second side surface 972-2 are opposite to each other.

The first side surface 972-1 may include the first side recess 973 formed in one side thereof, and the second side surface 972-2 may include the second side recess 974 formed in one side thereof. The first side recess 973 and the second side recess 974 are formed opposite to each other.

The third protrusion 937 of the upper adaptor 930 is inserted into the first side recess 973, and the fourth protrusion 938 of the upper adaptor 930 is inserted into the second side recess 974. As a result, the upper adaptor 930 and the base adaptor 970 can be fastened to each other and can be rotated with respect to each other about the third protrusion 937 and the fourth protrusion 938.

The first side recess 973 and the second side recess 974 may respectively include recesses 973-2 and 974-2 which have a shallow depth and serve to guide so as to cause the third protrusion 937 and the fourth protrusion 938 of the upper adaptor 930 to be easily inserted. The first side recess 973 and the second side recess 974 may respectively include recesses 973-1 and 974-1 which are formed under the shallow recesses 973-2 and 974-2 and have a greater depth so as to cause the third protrusion 937 and the fourth protrusion 938 inserted into the shallow recesses 973-2 and 974-2 not to be easily separated. The third protrusion 937 and the fourth protrusion 938 of the upper adaptor 930 can be rotated in the state of being fastened to the deeper recesses 973-1 and 974-1. According to the embodiment of the present invention, the recesses 973-2 and 974-2 having a shallow depth may not be present.

The base adaptor 970 may include the fixing recess 975 which is formed on one side of the base adaptor base portion 971. One side 253 of the impact absorbing member 950 may be inserted into the fixing recess 975.

The fixing recess 975 of the base adaptor 970 may be formed in the base adaptor base portion 971 in such a manner as to be under the position where the fixing portion 936 of the upper adaptor 930 is formed.

While Figs. 28 and 30 show that the fixing recess 975 has a recess shape, the fixing recess 975 may have a protruding shape according to the ninth embodiment of the present invention. Any shape capable of allowing the impact absorbing member 950 to be inserted, such as a protruding shape, a recess shape, can be applied.

The base adaptor 970 may be coupled to the wiper blade 190. Specifically, the base adaptor 970 may be disposed in the middle portion of the guide spring 193 and fastened to the guide spring 193.

The impact absorbing member 950 of the wiper system 90 according to the ninth embodiment of the present invention may be a coil spring.

One side of the impact absorbing member 950 may be disposed in the fixing recess 975 of the base adaptor 970, and the other side of the impact absorbing member 950 may be disposed on the fixing portion 936 of the upper adaptor 930.

Since the third protrusion 937 and the fourth protrusion 938 of the upper adaptor 930 are inserted into the first side recess 973 and the second side recess 974 which are formed in the first side surface 972-1 and the second side surface 972-2 of the base adaptor 970 respectively, the upper adaptor 930 and the base adaptor 970 can be rotated with respect to each other about the third protrusion 937 and the fourth protrusion 938. Here, the other side of the impact absorbing member 950 may be disposed on the fixing portion 936 of the upper adaptor 930 and contact the bottom surface of the upper adaptor base portion 931 of the upper adaptor 930.

During the operation of the wiper, when the impact is transmitted to or generated in the wiper system or when the external force is applied to the wiper system, the upper adaptor 930 and the base adaptor 970 may be rotated with respect to each other. Here, the length of a coil spring, i.e., the impact absorbing member 950, is reduced by the impact or external force, the coil spring is able to absorb or mitigate the impact by using elasticity.

### <Tenth Embodiment 100>

Hereinafter, a connector 1000, a base adaptor 1070, and an impact absorbing member 1050 of a wiper system 100 according to the tenth embodiment of the present invention will be described in turn. The wiper system 100 according to the tenth embodiment of the present invention does not include the upper adaptor provided to the aforementioned first to ninth embodiments.

The wiper system 100 according to the tenth embodiment of the present invention may include the base adaptor 1070 which is coupled to the wiper blade 190, the impact absorbing member 1050 which is fastened to the base adaptor 1070, and the connector 1000 which is fastened to the impact absorbing member 1050.

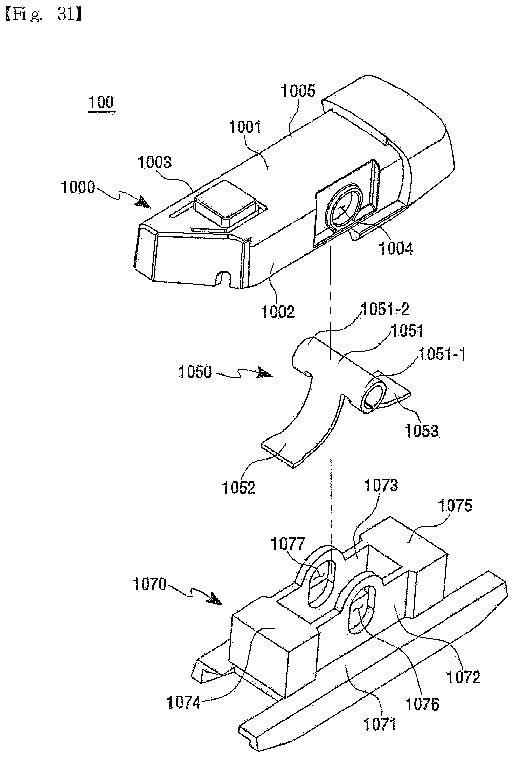

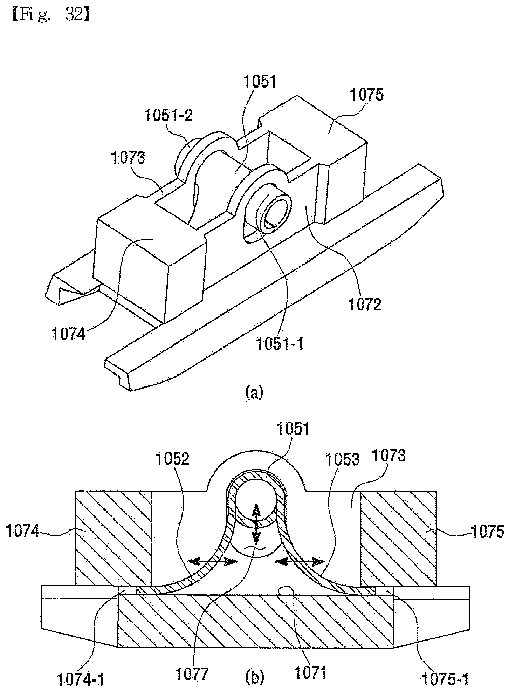

Fig. 31 is an exploded perspective view of the wiper system according to the tenth embodiment of the present invention. Fig. 32 shows that the impact absorbing member and the base adaptor shown in Fig. 31 have been coupled. A perspective view when the impact absorbing member 1050 and the base adaptor 1070 have been coupled is shown in (a) of Fig. 32. A cross sectional view of a cut away portion of (a) of Fig. 32 is shown in (b) of Fig. 32. Related descriptions will be provided with reference to Figs. 31 to 32.

The connector 1000 of the wiper system 100 according to the tenth embodiment of the present invention is the same as the connector 100 of the wiper system 10 according to the first embodiment, the detailed descriptions of the same parts of as those of the first embodiment will be omitted.

The connector 1000 may be connected to the below-described impact absorbing member 1050. Specifically, holes 1004 and 1005 may be formed in a first connector sidewall 1002 and a second connector sidewall 1003 of the connector 1000, respectively. A first end portion 1051-1 and a second end portion 1051-2 of the upper adaptor 1030 are inserted into the holes 1004 and 1005 respectively, so that the connector 1000 and the impact absorbing member 1050 can be fastened to each other. Therefore, the connector 1000 and the impact absorbing member 1050 can be rotated with respect to each other about the first end portion 1051-1 and the second end portion 1051-2.

The base adaptor 1070 of the wiper system 100 according to the tenth embodiment of the present invention may include a base adaptor base portion 1071, a first base adaptor sidewall 1072 and a second base adaptor sidewall 1073 which are formed in the longitudinal direction of the wiper blade 190 and protrude toward the connector 1000 from the base adaptor base portion 1071. The first base adaptor sidewall 1072 and the second base adaptor sidewall 1073 are opposite to each other and are disposed apart from each other at a predetermined distance.

The base adaptor base portion 1071 may be formed as a flat surface and may be formed as a surface having a curvature, a step, or a recess in accordance with the tenth embodiment of the present invention.

The first base adaptor sidewall 1072 and the second base adaptor sidewall 1073 may be formed in the longitudinal direction of the wiper blade 190 respectively and may be formed to protrude or extend toward the connector 1000 from the base adaptor base portion 1071. The second base adaptor sidewall 1073 is opposite to the first base adaptor sidewall 1072.

The below-described impact absorbing member 1050 may be disposed between the first base adaptor sidewall 1072 and the second base adaptor sidewall 1073.

Holes 1076 and 1077 may be formed in the middle portions of the first base adaptor sidewall 1072 and the second base adaptor sidewall 1073 respectively. The holes 1076 and 1077 may be opposite to each other. The first end portion 1051-1 and the second end portion 1051-2 of the impact absorbing member 1050 are inserted into the holes 1076 and 1077 respectively, so that the impact absorbing member 1050 and the base adaptor 1070 can be fastened to each other. Also, the impact absorbing member 1050 and the base adaptor 1070 can be rotated with respect to each other about the first end portion 1051-1 and the second end portion 1051-2.

The holes 1076 and 1077 formed in the middle portions of the first base adaptor sidewall 1072 and the second base adaptor sidewall 1073 respectively may be long up and down. Therefore, the first end portion 1051-1 and the second end portion 1051-2 of the impact absorbing member 1050 inserted into the holes 1076 and 1077 is able to move up and down along the long up and down holes 1076 and 1077. Also, the transverse widths or longitudinal widths of the holes 1076 and 1077 may be the same as each other.

In summary, since the first end portion 1051-1 and the second end portion 1051-2 of the impact absorbing member 1050 are disposed in the holes 1076 and 1077 formed in the first base adaptor sidewall 1072 and the second base adaptor sidewall 1073 respectively, the base adaptor 1070 is able to rotate about the first end portion 1051-1 and the second end portion 1051-2 of the impact absorbing member 1050 and is also able to move up and down. When impact is transmitted to or generated in the wiper system, the base adaptor 1070 is able to absorb and mitigate the impact by rotating and moving up and down.

The base adaptor 1070 may include a first sidewall connection member 1074 and a second sidewall connection member 1075 which are between the first base adaptor sidewall 1072 and the second base adaptor sidewall 1073 and connect the first base adaptor sidewall 1072 and the second base adaptor sidewall 1073.

The first sidewall connection member 1074 and the second sidewall connection member 1075 may have a flat plate shape having a predetermined thickness.

The first sidewall connection member 1074 and the second sidewall connection member 1075 may be disposed on both end portions of the first base adaptor sidewall 1072 and the second base adaptor sidewall 1073 and may connect the first base adaptor sidewall 1072 and the second base adaptor sidewall 1073.

Under the first sidewall connection member 1074, a first predetermined space 1074-1 may be formed between one end of the first sidewall connection member 1074 and the base adaptor base portion 1071. The first space 1074-1 may be formed by the step between one end of the first sidewall connection member 1074 and the base adaptor base portion 1071. One end of a first wing portion 1052 of the impact absorbing member 1050 may be disposed in the first space 1074-1.

Under the second sidewall connection member 1075, a second predetermined space 1075-1 may be formed between one end of the second sidewall connection member 1075 and the base adaptor base portion 1071. The second space 1075-1 may be formed by the step between one end of the second sidewall connection member 1075 and the base adaptor base portion 1071. One end of a second wing portion 1053 of the impact absorbing member 1050 may be disposed in the second space 1075-1.

The base adaptor 1070 may be coupled to the wiper blade 190. Specifically, the base adaptor 1070 may be disposed in the middle portion of the guide spring 193 and fastened to the guide spring 193.

The impact absorbing member 1050 of the wiper system 100 according to the tenth embodiment of the present invention may include a central portion 1051 and the first and second wing portions 1052 and 1053 which are between both end portions 1051-1 and 1051-2 of the central portion and extend from the central portion 1051 in both directions respectively. The first wing portion 1052 and the second wing portion 1053 may have a curved shape with the same radius of curvature.

Both end portions 1051-1 and 1051-2 of the central portion 1051 is referred to as the first end portion 1051-1 and the second end portion 1051-2 respectively.

The first end portion 1051-1 and the second end portion 1051-2 are inserted into the holes 1076 and 1077 formed respectively in the first base adaptor sidewall 1072 and the second base adaptor sidewall 1073 of the base adaptor 1070. Also, the first end portion 1051-1 and the second end portion 1051-2 are inserted into the holes 1004 and 1005 formed in the first connector sidewall 1002 and the second connector sidewall 1003 of the connector 1000. The first base adaptor sidewall 1072 and the second base adaptor sidewall 1073 of the base adaptor 1070 are inserted within the first connector sidewall 1002 and the second connector sidewall 1003 of the connector 1000.

Each of the first wing portion 1052 and the second wing portion 1053 may be between both end portions 1051-1 and 1051-2 of the central portion and may extend in the longitudinal direction of the wiper blade 190 from the central portion 1051 in both directions of the central portion 1051.

The first wing portion 1052 and the second wing portion 1053 may have a curved shape with the same radius of curvature.

Since the first end portion 1051-1 and the second end portion 1051-2 are disposed in the holes 1076 and 1077 formed in the first base adaptor sidewall 1072 and the second base adaptor sidewall 1073 of the base adaptor 1070 respectively, the base adaptor 1070 is able to rotate about the first end portion 1051-1 and the second end portion 1051-2 and is also able to move up and down.

During the operation of the wiper, when the impact is transmitted to or generated in the wiper system or when the external force is applied to the wiper system, the first wing portion 1052 and the second wing portion 1053 may be deformed. After being deformed, the first wing portion 1052 and the second wing portion 1053 can return their original shapes due to the curved shape of the first wing portion 1052 and the second wing portion 1053. Therefore, the impact absorbing member 1050 is able to absorb or mitigate the impact by using elasticity. The wiper system according to the first embodiment 10 to the tenth embodiment 100 of the present invention can reduce noise and impact which occur during the operation of the wiper. Also, it is possible to prevent the product being caught during the rolling of the wiper blade 190.

The features, structures and effects and the like described in the embodiments are included in at least one embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although the embodiments of the present invention were described above, these are just examples and do not limit the present invention. Further, the present invention may be changed and modified in various ways, without departing from the essential features of the present invention, by those skilled in the art. For example, the components described in detail in the embodiments of the present invention may be modified. Further, differences due to the modification and application should be construed as being included in the scope and spirit of the present invention, which is described in the accompanying claims.

**Reference Numerals**

| | | | |
|---|---|---|---|
| 100, 200, 300, 400, 500, 600, 700, 800, 900, 1000: | | | connector |
| 130, 230, 330, 430, 530, 630, 730, 830, 930: | | | upper adaptor |
| 150, 250, 350, 450, 550, 650, 750, 850, 950, 1050: | | | impact absorbing member |
| 170, 270, 370, 470, 570, 670, 770, 870, 970, 1070: | | | base adaptor |
| 190: | wiper blade | 191: | spoiler |
| 193: | guide spring | 195: | wiper rubber |
| 197: | end cap | | |

## Claims

1. A wiper system comprising:
a base adaptor which is coupled to a wiper blade;
an upper adaptor which is fastened to the base adaptor;
an impact absorbing member which is disposed between the base adaptor and the upper adaptor; and
a connector which is fastened to the upper adaptor.

2. The wiper system of claim 1, wherein the impact absorbing member has a predetermined length in one direction.

3. The wiper system of claim 2,
wherein the base adaptor comprises a base adaptor base portion, a first base adaptor protrusion which protrudes toward the connector from a middle portion of the base adaptor base portion, and a second base adaptor protrusion which protrudes toward the connector from a central portion of a top surface of the first base adaptor protrusion,
and wherein the impact absorbing member is disposed on a top surface of the first base adaptor protrusion and is coupled to the second base adaptor protrusion.

4. The wiper system of claim 1, wherein the impact absorbing member has a predetermined length and comprises at least one bent portion.

5. The wiper system of claim 4,
wherein the base adaptor comprises a base adaptor base portion, a base adaptor protrusion which protrudes toward the connector from the base adaptor base portion, and a receiving recess formed between the base adaptor base portion and the base adaptor protrusion,
and wherein one side of the impact absorbing member is disposed in the receiving recess, and the other side of the impact absorbing member is disposed on a top surface of the base adaptor protrusion.

6. The wiper system of claim 1,
wherein the impact absorbing member has a predetermined length and comprises two or more bent portions,
wherein the impact absorbing member comprises a first portion, a second portion, and a third portion which are separated by the bent portion,
and wherein an angle formed by the first portion and the second portion and an angle formed by the second portion and the third portion are obtuse angles.

7. The wiper system of claim 6,
wherein the base adaptor comprises a base adaptor base portion, a first base adaptor sidewall and a second base adaptor sidewall which are formed in a longitudinal direction of the wiper blade and protrude toward the connector from the base adaptor base portion,
wherein the first base adaptor sidewall and the second base adaptor sidewall are opposite to each other and are disposed apart from each other at a predetermined distance,
wherein one or more connection members which connect the first base adaptor sidewall and the second base adaptor sidewall are formed between the first base adaptor sidewall and the second base adaptor sidewall,
and wherein the first portion of the impact absorbing member is disposed under the connection member.

8. The wiper system of claim 1,
wherein the impact absorbing member has a predetermined length and comprises two or more bent portions,
wherein the impact absorbing member comprises a first portion, a second portion, and a third portion which are separated by the bent portion,
wherein the first portion is disposed between the second portion and the third portion,
and wherein the second portion and the third portion have a shape convex toward the connector.

9. The wiper system of claim 1,
wherein the impact absorbing member comprises a first member, a second member, and a third member,
wherein the first member has a predetermined length in one direction,
wherein the second member protrudes from one side of the first member toward the connector and comprises at least one bent portion,
wherein the third member protrudes from the other side of the first member toward the connector and comprises at least one bent portion,
and wherein an end portion of the second member and an end portion of the third member face each other.

10. The wiper system of claim 1,
wherein the impact absorbing member has a predetermined length in one direction,
wherein the impact absorbing member comprises a plurality of wing portions which extend respectively from both side portions and a middle portion of the impact absorbing member in both directions,
and wherein the wing portions extending respectively from the middle portion in both directions are higher than the middle portion.

11. The wiper system of claim 10,
wherein the base adaptor comprises a base adaptor base portion, and a first base adaptor protrusion and a second base adaptor protrusion which protrude toward the connector from the base adaptor base portion,
wherein the first base adaptor protrusion and the second base adaptor protrusion are opposite to each other and are disposed apart from each other at a predetermined distance,
and wherein the impact absorbing member is disposed between the first base adaptor protrusion and the second base adaptor protrusion.

12. The wiper system of claim 1,
wherein the impact absorbing member comprises an opening and has a long plate shape having a predetermined thickness in one direction,
wherein the impact absorbing member comprises a first extension part and a second extension part which extend respectively from at least one of a plurality of surfaces forming the opening toward the opening,
wherein the first extension part and the second extension part are parallel with each other,
and wherein a middle portion of the first extension part and a middle portion of the second extension part are curved to protrude toward the connector respectively.

13. The wiper system of claim 12,
wherein the base adaptor comprises a base adaptor base portion and a base adaptor protrusion which protrudes toward the connector from the base adaptor base portion,
and wherein the base adaptor protrusion is disposed between the first extension part and the second extension part.

14. The wiper system of claim 1,
wherein the impact absorbing member comprises a first member and a second member,
wherein each of the first member and the second member has a plate shape having a predetermined thickness and comprises three or more bent portions,
wherein an end portion of the first member is bent toward the other end portion of the first member,
wherein an end portion of the second member is bent toward the other end portion of the second member,
and wherein a recess is formed in a middle portion of an end portion of the first member, and an end portion of the second member is disposed in the recess.

15. The wiper system of claim 14,
wherein the base adaptor comprises a base adaptor base portion and a plurality of base adaptor catching portions which protrude toward the connector from the base adaptor base portion,
and wherein the plurality of base adaptor catching portions fix the first member and the second member.

16. The wiper system of claim 1, wherein the impact absorbing member is a coil spring.

17. The wiper system of claim 16,
wherein the base adaptor comprises a base adaptor base portion, a base adaptor protrusion which protrudes toward the connector from the base adaptor base portion, and a fixing recess which is formed on one side of the base adaptor base portion,
and wherein one side of the impact absorbing member is disposed in the fixing recess.

18. A wiper system comprising:
a base adaptor which is coupled to a wiper blade;
an impact absorbing member which is fastened to the base adaptor; and
a connector which is fastened to the impact absorbing member,
wherein the impact absorbing member comprises
a central portion, and a first wing portion and a second wing portion which are between both end portions of the central portion and extend from the central portion in both directions respectively,
and wherein the first wing portion and the second wing portion have a curved shape with the same radius of curvature.

19. The wiper system of any one of claims 8, 9 or 18,
wherein the base adaptor comprises a base adaptor base portion, a first base adaptor sidewall and a second base adaptor sidewall which are formed in a longitudinal direction of the wiper blade and protrude toward the connector from the base adaptor base portion,
wherein the first base adaptor sidewall and the second base adaptor sidewall are opposite to each other and are disposed apart from each other at a predetermined distance,
and wherein the impact absorbing member is disposed between the first base adaptor sidewall and the second base adaptor sidewall.
